(19) Europäisches Patentamt / European Patent Office / Office européen des brevets

(11) **EP 2 001 572 B1**

## (12) EUROPEAN PATENT SPECIFICATION

(45) Date of publication and mention
of the grant of the patent:
**22.11.2017 Bulletin 2017/47**

(21) Application number: **07863318.7**

(22) Date of filing: **22.02.2007**

(51) Int Cl.:
***B01D 3/20*** *(2006.01)*

(86) International application number:
**PCT/US2007/062566**

(87) International publication number:
**WO 2008/073507 (19.06.2008 Gazette 2008/25)**

(54) **NON-WOVEN MEDIA INCORPORATING ULTRAFINE OR NANOSIZE POWDERS**

VLIESMEDIEN MIT ULTRAFEINEN PULVERN BZW. PULVERN IN NANOGRÖSSE

MILIEUX NON TISSÉS INTÉGRANT DES POUDRES ULTRAFINES OU DE TAILLE
NANOMÉTRIQUE

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **31.03.2006 US 744043 P
12.09.2006 US 531107**

(43) Date of publication of application:
**17.12.2008 Bulletin 2008/51**

(73) Proprietor: **Argonide Corporation
Sanford, FL 32771 (US)**

(72) Inventors:
• **TEPPER, Frederick
Sanford, FL 32771 (US)**
• **KALEDIN, Leonid A.
Port Orange, FL 32129 (US)**

(74) Representative: **Hoffmann Eitle
Patent- und Rechtsanwälte PartmbB
Arabellastraße 30
81925 München (DE)**

(56) References cited:
**EP-A- 0 958 851      EP-A1- 1 219 335
WO-A-98/02231       WO-A1-2007/033173
US-A- 4 761 323      US-A1- 2003 127 393**

**Description**

**FIELD OF THE INVENTION**

The present invention relates to nano particles, and particularly to the use of nano powders in non-woven filter media without the use of adhesives for use in non-woven structures, to filter contaminants from water, air, and gas.

**BACKGROUND**

The field of nanotechnology and the use of nano size particles is growing rapidly. In particular, nanopowders are being developed as abrasives (e.g., tungsten carbides) and ultraviolet adsorbers (e.g., titanium and zinc oxides). Additionally, there is major interest and investment in engineering biological function into nanostructures (nanobiotechnology). Small particles, and particularly ultrafine and nano particles, have superior and unexpected sorption behavior compared to coarser particles. This improved reactivity is owed to the much higher surface area and to the more active surfaces. Structuring nanopowders on substrates such as membranes or on fibers is often necessary in order to best utilize them for advanced applications. Therefore, it is desirable to immobilize nanoparticles into non-woven fibrous structural media so that the manufacture of nano composites by high speed methods is practical.

Unfortunately, nano particles are too small to be captured in conventional webs because the nano particles tend to agglomerate, causing the fluid to thicken, preventing the nano particles from passing through the supporting web, thereby causing the nano particles to be lost. This makes it impossible to manufacture media containing nano particles by conventional, high speed, low cost paper-making technology for example. While it is possible to use binders to attach nano particles to fibrous structures in the media, the binders easily envelop nano particles, thereby partially or fully deactivating the nano particles and largely diminishing their intended function.

The prior art, for example US 2003/0127393, provides many types of materials which remove, filter, or capture contaminants from gas streams. These filters, while fairly effective in the applications for which they were designed, do not offer the level of effectiveness necessary for high performance applications. Filter media are now expected to provide higher filtration efficiency, higher dirt holding capacity, lower pressure drop, lower cost, greater durability, improved chemical resistance, no particulation (i.e., release of filter media particles into the filtrate stream), and the mechanical strength to cope with pressure swings. While smaller sorbent particles provide better adsorption efficiency, they do so at the expense of pressure drop within the filter.

Granular catalysts are used for purification of liquids and gases. Their reactivity is heavily affected by the external surface area of the catalyst exposed to the liquid or gas stream. Platinum and other precious metal catalysts, only nanometers in size, are typically dispersed onto adsorption media that might include ceramic beads, honeycombed ceramic structures, and onto coarser granules such as activated carbon and activated alumina.

Activated carbon is a well-known sorbent particle. It has micro-pores of about 0.2 to 20 nm in diameter. Activated carbon is useful as a sorbent particle because its small pore dimensions provide a correspondingly large surface area per unit weight with an associated large number of active sorption sites on and in the particle. At the same time, the dimensions of the pore have a significant impact upon diffusion rates of fluid species through the granule. Generally, diffusion rates of fluid species in a sorbent medium are determined by the mean free path length of the fluid molecules being sorptively taken up by such sorbent medium. The smaller the pores in such a sorbent, the longer is the mean free path length, and the slower the diffusion rates. Therefore, the small pores in activated carbon deleteriously constrain the ingress of fluid species into the small-sized, highly tortuous passages of the porosity. Reduction of the size of the particle substantially reduces the path length, thereby reducing the time required for any sorbate to reach adsorption sites within the structure. This results in greater filtration efficiency in removing a contaminant from a flowing stream.

The use of granular activated carbon (GAC) is known in water purification applications, including drinking water, and in many industrial applications, including the pharmaceutical industry and beverage manufacturing. In drinking water, GAC is used to absorb dissolved organics (many of which are toxic or carcinogenic) and chlorine. In air purification, GAC is used to control odors and gaseous and vapor contaminants in hospitals, laboratories, restaurants, animal facilities, libraries, airports, commercial buildings and respiratory equipment. GAC is often included to remove volatile organic compounds from air streams. A disadvantage of this approach is that these filters have large interstitial spaces to ensure that the filter exhibits a very low pressure drop. As a result, these filters are notoriously ineffective in capturing small particles as well as volatile contaminants. If the pore size of these filters were reduced sufficiently to capture a large percentage (by count) of particles in the air passing through the filter, then the filter would have too high a pressure drop (i.e., exhibit too high a flow resistance) to be usable with the forced-air heating unit. Also, filters having very small pore sizes are easily and rapidly clogged due to debris accumulation on upstream surfaces, which causes a rapid decline in the ability of the filters to pass air without having to apply a prohibitively high pressure gradient across the filter. GAC is often used as loose granules in a packed bed. However carbon beds are difficult to design into useful filter configurations because loose particles can migrate, causing channeling and clogging of the bed.

Fibrous structural media are used extensively as filters. Compared to a granular bed such as GAC, a fibrous structure minimizes channeling, allows significant filter design variations, and can be manufactured by low cost assembly methods such as paper making.

Powdered Activated Carbon (PAC) is generally recognized as having superior adsorption kinetics to GAC, while having a higher external surface area and approximately equivalent iodine numbers. However, it has been reported in the prior art that combining PAC into a non-woven matrix is difficult because adhesives are required to attach it to the fiber matrix which results in at least some of the particles becoming ineffective for filtration because a portion of the surface of the particles is contaminated by the adhesive. In order to minimize this contamination, larger particles are often used to minimize the point of contact between the adhesive and the particles of PAC. For example, it is known to use PAC having particle sizes greater than about 100 microns in gaseous applications. Often, the use of PAC in liquid applications is limited to decolorization applications. It is known in the art to impregnate activated carbon with a variety of compounds, including catalysts and chemisorbents, that remove or modify contaminants that are not readily physiosorbed by the carbon. For example, ASC Whetlerite consists of activated carbon impregnated with copper, chromium, and silver salts that absorb and destroy chemical warfare agents such as cyanogen chloride, hydrogen cyanide, and arsine. Copper and chromium (currently replaced with triethylenediamine(TEDA)) act as chemisorbents for cyanogens chloride and hydrogen cyanide, while silver catalyzes arsine to an oxide. In other examples, activated carbon is impregnated with citric acid to increase the ability of the activated carbon to adsorb ammonia or with hydroxides, such as sodium hydroxide or other caustic compounds, to remove hydrogen sulfide. In the nuclear field, it is known to impregnate filters comprising several beds of activated carbon with potassium iodide (KI) to exchange isotopes with radioactive iodine in the event of an accidental release to the air.

Catalyst life is limited by poisons that are deposited on the surface of the granule or powder. A powdered catalyst, with its higher surface area to volume ratio than a granular catalyst, is less susceptible to poisoning. Additionally, a non-woven media used as support for a powdered catalyst, provides greater reactivity, reduced bed depth, and a flexible structure, allowing latitude in design. Thus, there is a need to bond the powdered catalyst to the fibrous structure without using binders and with a strength sufficient to minimize the loss of catalysts into the fluid or gas stream.

Filtration capability is diminished by packing and channeling of sorbents that result when sorbent granules abrade against each other. A non-woven filter where the sorbent is dispersed and confined within the structure, without using binders, would improve the filtration capacity. Given the above, there is a need among consumers and industrial users alike for a non-woven fibrous structure that retains ultrafine and nanosize particles. It is desirable that the media comprising a non-woven structure have a high efficiency for retaining small particles, soluble water contaminants, and volatile air contaminants.

## SUMMARY OF THE INVENTION

The present invention meets these needs. In an embodiment, the present invention is a new particulate filter or filter media for gaseous media that satisfies the need for a high efficiency and high capacity particulate filter that intercepts pathogens and other particulate matter from air or gas streams, including liquid aerosolized particulate matter while also having a low pressure drop.

In another embodiment, the present invention satisfies the need for a non-woven fibrous medium that retains ultrafine or nano particles without the need for binders or adhesives.

Accordingly, it is an object in an embodiment of the present invention to provide a filtration efficiency that is at least as high as conventional HEPA filters and that is resistant to liquid aerosol clogging.

It is yet another object in an example of an embodiment of the invention to provide a media that filters aerosolized bacteria and viruses.

It is a further object in an example of an embodiment of the present invention to produce an air filter that has a high porosity and is therefore more tolerant of adsorbing aqueous mists than conventional filter material.

It is still a further object in an example of an embodiment of the invention to provide media that has a filtration efficiency that is at least as high as conventional ULPA or Super ULPA filters.

It is still a further object in an example of an embodiment of the invention to provide a filter media that has a pressure drop that is lower than that which occurs in conventional filters.

It is still a further object in an example of an embodiment of the invention to provide a filter media that has a larger pore size and higher porosity than that in HEPA filters, therefore providing for a higher capacity for water droplets before flooding.

It is still a further object in an example of an embodiment of the invention to provide a filter media that is energy-efficient.

It is yet another object in an example of an embodiment of the present invention to provide a filter media that has an extended filter life compared to conventional filters.

It is yet another object in an example of an embodiment of the present invention to provide a filter media that has low maintenance costs.

It is still a further object in an example of an embodiment of the present invention to provide a filter media that filters hazardous waste materials and that has minimal costs associated therewith.

It is yet another object in an example of an embodiment of the present invention to provide a filter media that is strong enough to be pleated.

It is another object in an example of an embodiment of the present invention to provide a method of manufacture of a filter or filter media that filters gaseous media at a filtration efficiency that is at least as high as conventional HEPA filters and that is resistant to liquid aerosol clogging.

It is yet another object in an example of an embodiment of the present invention to provide a method of using a filter or filter media to remove particulates and aerosols from gaseous media.

It is another object in an embodiment of the present invention to provide a non-woven fiber matrix into which nanostructures are engineered at a low manufacturing cost.

It is also object in an embodiment of the present invention to provide a non-woven medium that removes soluble and volatile organics and halogens from fluid and gas streams at high efficiency, high capacity, and with a low pressure drop.

It is yet another object in an embodiment of the present invention to provide a chemical sorption medium that also filters particulates, including microbial pathogens, from fluid media.

It is also an object in an embodiment of the present invention to incorporate powdered, nano size catalysts, including photocatalysts, oxidation catalysts, or powdered activated carbon impregnated with catalysts, into a non-woven medium by attaching the catalysts or powdered activated carbon to a non-woven scaffold.

It is still a further object in an embodiment of the present invention to engineer a non-woven medium containing ultrafine or nanosize powder that is held to the medium to minimize dusting.

It is still a further object in an embodiment of the present invention to incorporate finely powdered or nanosize ion exchange resins and macroporous polymers into a non-woven medium.

It is still a further object in an embodiment of the present invention to incorporate biologically active components such as DNA or RNA into a non-woven medium.

It is another object in an embodiment of the present invention to provide a method for incorporating nano size pigments, color reactant chemicals, and fine abrasives into a non-woven medium.

Generally, the present invention is a filter or fibrous structure for fluids comprising nano alumina fibers that adsorb particles from the fluid and a plurality of second fibers arranged in a matrix with the nano alumina fibers to create asymmetrical pores. In an example, the second fibers are comprised of fibers whose minor dimension is larger than the minor dimension of the nano alumina fibers by about one order of magnitude. The second fibers are included with the nano alumina fibers in order to provide a scaffolding for creating pores or large interfiber spaces into or onto which nano alumina fibers are dispersed. In examples, the asymmetric pore size is greater than about 5 mm. A plurality of nanosize particles, i.e. particles having an average particle size of below 0.1 $\mu$m, are deposited onto the nano alumina fibers to improve removal of contaminants from the fluid medium.

Coarse fibers provide or form larger pores into or onto which nano alumina fibers are dispersed. However, coarse fibers have less surface area per unit volume or mass, and therefore the amount of nano alumina dispersed thereon or in the pores is significantly reduced. Therefore, in the present invention, second fibers are comprised of a combination of coarse and fine fibers. The inclusion of fine fibers provides additional surface area so that more nano alumina fibers can be loaded into or onto the media.

While not wishing to be bound by theory, ultra fine and nanosize particles that have diameters that are smaller than the average pore size of the filter media are retained by electroadhesive forces on the nano alumina fibers. Particles larger than the pore size of the media are held largely by mechanical entrainment. No binders are used in the fibrous structure that would envelop or otherwise desensitize the particles deposited onto the nano alumina fibers.

In another embodiment, the invention is directed to methods of manufacturing the filter medium or fibrous structure.

The nano alumina filter media or fibrous structure can be used to remove toxic contaminants and other particulate matter from fluid streams.

These and other details, objects and advantages of the present invention will become better understood or apparent from the following descriptions, examples, and figures showing embodiments thereof.

## BRIEF DESCRIPTION OF THE FIGURES

Figure 1 is a graphical depiction of air flow velocities through nano alumina filters and a HEPA filter as a function of pressure drop across the filters.

Figure 2 is a graphical depiction of turbidity as a function of volume during filtration of 0.2 μm latex spheres suspended in water through nano alumina filters and a HEPA filter.

Figure 3 is a graphical depiction of penetration of nano alumina and HEPA filters while continuously challenging them with 0.3 μm NaCl aerosols.

Figure 4 is a graphical depiction of air resistance of nano alumina and HEPA filters while continuously challenging them with 0.3 μm NaCl aerosols.

Figure 5 is a graphical depiction of air flow velocity vs. pressure drop through nano alumina filters after being preconditioned with 0.5 and 1 μm latex spheres.

Figure 6 is a graphical depiction of the penetration of nano alumina filters preconditioned with latex beads compared to a nano alumina filter without preconditioning and a HEPA filter when penetrated by 0.3 μm NaCl aerosols.

Figure 7 is a graphical depiction of the air resistance of nano alumina filters preconditioned with latex beads compared to that of a nano alumina filter without preconditioning and a HEPA filter.

Figure 8 is a graphical depiction of the penetration of 0.3 μm NaCl aerosols through nano alumina filters and a HEPA filter.

Figure 9 is a graphical depiction of the air resistance of nano alumina filters and a HEPA filter during NaCl aerosol capacity testing.

Figure 10 is a graphical depiction of fractional efficiency of nano alumina filters as a function of particle size of aerosolized KCl droplets.

Figure 11 is a graphical depiction of the antimicrobial effect of silver impregnated nano alumina filters on bacterial proliferation.

Figure 12 is a schematic of the system used to challenge the nano alumina filters with waterborne bacterial aerosols.

Figure 13 is a graphical depiction of the relationship between the pressure drop and pore size as a function of fiber diameter.

Figure 14 is a comparison of pressure drop of nano alumina filter media and a sub-HEPA filter.

Figure 15 is a transmission electron micrograph of a nano alumina fiber on a microglass fiber enveloped by nanospheres of silica.

Figure 16 is a graphical depiction of the adsorption of soluble iodine by the claimed nano alumina fibers compared to adsorption by commercially available media containing activated carbon.

## DETAILED DESCRIPTION

### Definitions

In order to properly understand the disclosure of the claimed invention, certain terms used herein are described in the following paragraph. While the inventors describe the following terms, the inventors in no way intend to disclaim the ordinary and accustomed meanings of these terms.

The term "electrostatic" as used herein is defined as of or relating to electric charges. The term "aspect ratio" as used herein is defined as the ratio of the longitudinal length of a fiber to the cross-sectional diameter of the fiber.

The term "nano alumina" as used herein is defined as fibers having an aspect ratio in excess of about 5, where the smallest dimension is less than about 50 nm. The cross section of the fiber may be either circular (cylindrical fiber) or rectangular (platelet) in shape. The fibers are comprised of alumina, with various contents of combined water to result in compositions principally of AlOOH with various amounts of $Al(OH)_3$, with possible impurities of gamma and alpha alumina.

The term "lyocell" as used herein refers to a fibrillated cellulose fiber precipitated from an organic solution in which no substitution of hydroxyl groups takes place and no chemical intermediates are formed (Courtaulds, Ltd.).

The term "High Efficiency Particle Air" (HEPA) refers to a grade of filter media that is capable of retaining > 99.97% of 0.3 $\mu$m particles.

The term "Ultra Low Penetration Air" (ULPA) refers to a grade of filter media that is capable of retaining > 99.99% of a specified particle size at a specified medium velocity.

The term "Super ULPA" refers to a grade of filter media that is capable of retaining > 99.9999% of a specified particle size at a specified medium velocity.

As used herein, the term "adsorbent" is defined to be any material that is capable of adsorbing impurities primarily by physical adsorption to its surface.

The term "absorbent" is defined to be any material that is capable of drawing a substance into its inner structure.

The term "contaminant reduction" is defined to be an attenuation of an impurity in a fluid, wherein the impurity is intercepted, removed, or rendered chemically or biologically inactive in order to improve the utility of the fluid, such as by rendering the fluid safer for human use or more useful in industrial applications.

The term "NanoCeram" refers to mixtures of nano alumina fibers and coarse fibers where the coarse fibers serve as a scaffolding for the nano alumina fibers to create an array having asymmetric pores.

A "fine powder" is defined to be a powder having average particle size that is substantially below 100 mesh, and is preferably below 325 mesh (44 $\mu$m).

An "ultrafine particle" is defined to be a particle having an average particle size that is between 0.1 and 10 $\mu$m.

A "nano particle" is defined to be a particle having an average particle size that is less than 0.1 $\mu$m, including but not limited to nucleic acids (e.g., DNA and RNA), proteins, low solubility or semi-volatile drugs, macromolecular particles, functionalized polymers, ligands with engineered functionality, and carbon tubes.

A "microorganism" is defined to be any living organism that may be suspended in a fluid, including but not limited to bacteria, viruses, fungi, protozoa, and reproductive forms thereof including cysts and spores.

"Paper" or "paper-like" is defined to be a generally flat, fibrous layer or mat of material formed by a wet laid process.

A "particle" is defined to be a solid or microencapsulated liquid having a size that ranges from colloidal to macroscopic, with no limitation on shape.

A "sorbent" is defined to be any powder particle that is capable of removing contaminants from a fluid stream, including catalysts that are capable of converting contaminants into another form less hazardous form?. The term "sorbent" also includes a powdered catalyst or a catalyst impregnated onto a solid powdered or granular support such as activated carbon.

A "medical structure" is defined to be a nonwoven medium useful in medical applications such as containment of infection, wound protection, and the like.

**Description of Embodiments**

In an embodiment, the present invention provides a filter media for removing particles, including liquid and particularly water aerosolized particles, from a fluid medium that is passed through the media in order to reduce contaminants therein. In examples, the particles are pathogens such as bacteria, viruses, mold, fungi, mildew, organic matter, inorganic matter, microorganisms, carbonaceous particles, metal working fluid mists, paint mists, pesticides, ink mists, or acid mists. In examples, the fluid stream has liquid aerosolized particles such as water aerosolized particles. In an example, the filter media is a non-woven, electrostatic media. The filter media comprises nano alumina fibers mixed with second fibers. In an example, the nano alumina are non-spherical. The second fibers are arranged in a matrix to create asymmetrical pores. In an example, fine metallic aluminum powder is reacted with the second fibers to form the electrostatic media. The reaction is carried out by adding ammonia to the aluminum and second fiber mixture. The mixture is heated to the boiling point of water. In another example, aluminum tri-hydroxide is heated under conditions of high temperature and pressure in the presence of the second fibers to form the electrostatic media. The reaction is carried out at about 175°C and approximately 5 bar for about thirty minutes.

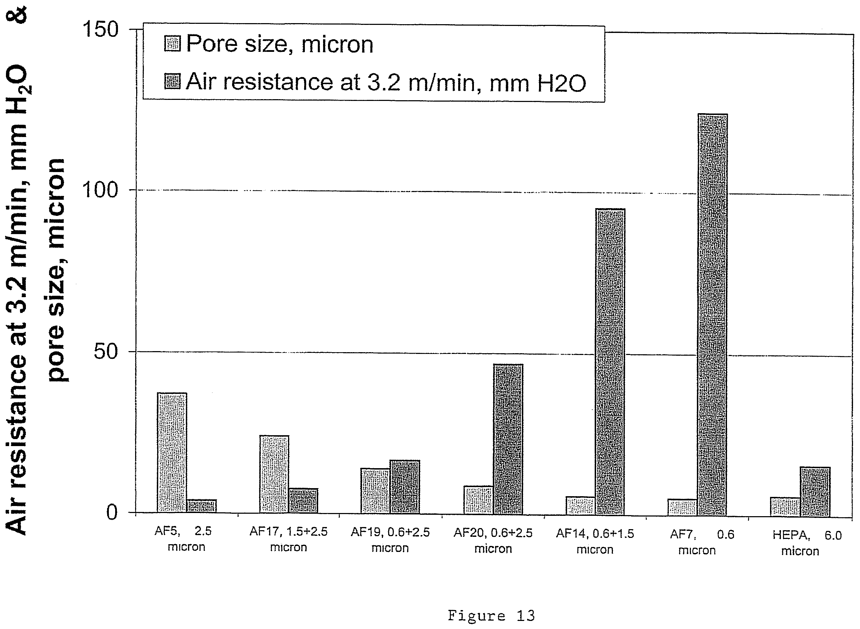

Second fibers may be any fiber that is strong enough to tolerate pleating, including microglass, cellulose, or fibrillated cellulose. In an example, second fibers have a minor dimension that is larger than the minor dimension of the nano alumina fibers by at least about one order of magnitude. In examples for an air or gas filter, average pore sizes range from about 4 to about 48 $\mu$m. Preferably, average pore size is greater than about 10 $\mu$m. More preferably, average pore size is greater than about 20 $\mu$m. In general, pore size is related to the diameter of second fibers. Therefore, a plurality of second fibers having a small diameter will create a plurality of asymmetrical pores having small pore sizes, while a plurality of second fibers having a larger diameter will create a plurality of asymmetrical pores having comparatively larger pore sizes. *See, e.g.,* Table 1 and Figure 13. However, as the diameter of the second fiber increases, the surface area to unit volume ratio decreases and as a result fewer nano alumina fibers are dispersed on the second fibers and/or in the pores. Therefore, in the present invention, the plurality of second fibers is comprised of a combination of a plurality of coarse and a plurality of fine fibers. Fine fibers may all have substantially similar average diameters, or some fine fibers may have different diameters. The inclusion of fine fibers results in a corresponding reduction in pore size. *See, e.g.,* Table 1 and Figure 13.

The pore sizes determine the pressure drop across the filter media. In a preferred example, the pressure drop is less than about 35 mm $H_2O$ for a final composite filter or filtration unit at a flow velocity of about 3.2 m/min.

In an example, the claimed filter media further comprises a particulate sorbent, preferably a colloidal particle that is added to the filter media. To adsorb volatile organics, nerve agents, or mustard gas, activated carbon is added as a fine powder (for example, particles having a size as small as about 1 $\mu$m and having an average size of about 28 $\mu$m), to provide more rapid adsorption than typical larger granular carbons.

In an example, the claimed filter media further comprises a binder. The binder may have a fiber shape (Invista T104) or may be a resin such as Rohm or Haas Rhoplex HA-16. Inclusion of binder increases strength and/or pleatability of the fiber media, although binder is not necessary for bonding particles to the structure.

In an example, the filter media may further comprise an antimicrobial agent that is mixed with the plurality of nano alumina and second fibers. In manufacture, after the slurry is made and before the mixture is filtered onto a screen, the antimicrobial agent is added and adsorbed to the nano alumina fibers in order to make it available as an antimicrobial agent. In an example, the antimicrobial agent is silver. In other examples, ions such as copper and zinc work either synergistically with silver as an antimicrobial agent. In yet another example, ions such as copper and zinc work alone as an antimicrobial agent.

In an example of the present invention, the filter media is electrostatically charged, such that the nano alumina fibers capture particles such as pathogens and other matter. In an example, the filter media is a homogenous non-woven filter.

In an example, the fluid media is pretreated or preconditioned by flowing a plurality of particles therethrough. Particles may have diameters ranging from about 0.3 to about 1.5 $\mu$m. Inclusion of these particles blocks at least some of the largest pores of the plurality of asymmetrical pores in order to reduce initial leakage through the filter media. Additionally, preconditioning helps to create or produce HEPA or ULPA capability throughout the use of the filter. In an example, the plurality of particles is a plurality of latex spheres, although the plurality of particles may be made of any substance that is able to block at least some of the largest pores.

In an example, the claimed nano alumina filter media has a retention efficiency that is at least as good as HEPA. In another example, the claimed filter media has a retention efficiency that is at least as good as ULPA.

In another embodiment, the claimed invention is a method of manufacturing the nano alumina fluid filter. The method of manufacture comprises the steps of forming nano alumina fibers in the presence of a plurality of second fibers. The second fibers are arranged to form a plurality of asymmetrical pores. In an example, the nano alumina filter media is formed into a homogenous single layer. In another example, the nano alumina filter media is formed into more than one layer. In yet another example, the nano alumina filter media is pleated.

The filter media may be used in a filtration system. In use, an air or gas stream is passed through the filter media and particulate matter is removed therefrom by retaining the particles in the filter media. In an example, the fluid medium comprises a suspension of water droplets. Examples of use of the filter include, but are not limited to, use in room air filtration, use in respirators or face masks, use in automotive air filters, use in a clean room, use in an operating room, or use in an industrial setting, such as to remove paint or other particular matter contained in industrial mists. In an example, the filter media is used in an environment that has a humidity that is greater than about 75% RH.

In another embodiment, the present invention has wide applications in nanotechnology and provides a fibrous structure for retaining particles that are very difficult to disperse and contain within fibrous webs. In examples, the dispersed particles are sorbents or catalysts that can remove contaminants from fluid streams. Examples of contaminants include: organic compounds such as halogenated organics, pesticides, and volatile organic compounds. In other examples, the contaminants are bacteria and virus, mold, fungi, mildew, organic matter, inorganic matter, microorganisms, carbonaceous particles, metal working fluid mists, paint mists, pesticides, ink mists, or acid mists.

The fibrous structure is a web or fabric or other medium having a structure of individual fibers that are interlaid in a disorganized manner. Preferably, the fibrous structure is prepared by wet laying, but it may also be prepared by other methods well known in the art including air laying, meltblowing, spunbonding and carding. The fibrous structure comprises nano alumina fibers mixed with and attached to second fibers as described above and further comprising a plurality of nanosize particles (described in more detail below) disposed onto the nano alumina fibers. The second fibers are arranged in a matrix to create asymmetrical pores. As described above, fine metallic aluminum powder is reacted with the second fibers to form the fibrous structure. The reaction is carried out by adding ammonia to the aluminum and second fiber mixture. The mixture is heated to the boiling point of water. The nano particles are added to the mixture either before the aluminum water reaction, during the water reaction at boiling, or after the mixture is cooled to room temperature. The resulting furnish (formulation) is converted to a fibrous structure by applying suction to the underside of a screen, as when a paper handsheet is formed or as on a paper making machine, methods that are well known in forming non-woven media via wet processing.

A plurality of nano particles are disposed onto nano alumina fibers. In examples, the plurality of particles is a chemisorbent, a high surface area adsorbent, or a catalyst that converts a contaminant into a less hazardous compound. Examples of sorbents include activated carbon; silica, silicates, aluminasilicates, titanium silicate lead adsorbent, and silica gel; zeolites; activated alumina; metal and metal oxides including titanium dioxide; catalysts such as precious metals and transition metal catalysts, including platinum, palladium, silver and silver oxide, iridium, rhodium and gold, and copper activated manganese dioxide; bone char; calcium hydroxyapatite; magnesia; perlite; talc; polymeric particulates; clay; ion exchange resins; ceramics; and combinations thereof.

In another example, the plurality of nano particles is RNA, a nanosize polymer, a biologically active macromolecule such as DNA, a fanctionalized macromolecule, or a microencapsulant of substances that control release of an enveloped material, such as microencapsulated dyes, drugs that may be released from a non-woven wound dressing, drugs that are able to be vaporized into an inhalation stream, or agents that are capable of neutralizing toxic substances such as chemical warfare agents.

In another example, the plurality of nano particles is activated carbon. The claimed fibrous structure comprising powdered activated carbon provides a more rapid adsorption of contaminants than commercially available activated carbon filled media. Examples of the claimed fibrous structure comprising powdered activated carbon are useful to protect military and civilian personnel from biological and chemical attacks that are delivered as an aerosol or through contamination of the water supply.

In an example, the fibrous structure is used in medical applications, such as a wound dressing or an inhaler.

In another embodiment, the claimed invention is a method of manufacturing the fibrous structure. The method of manufacture comprises the steps of forming nano alumina fibers in the presence of a plurality of second fibers. The second fibers are arranged to form a plurality of asymmetrical pores. A plurality of nanosize particles are added to the mixture for disposal onto the nano fibers. In an example, water is removed from the mixture. In an example, the fibrous structure is formed into a homogenous single layer. In another example, the fibrous structure is formed into more than one layer. In yet another example, the fibrous structure is pleated.

In use, a fluid stream is passed through the fibrous structure and contaminants are removed therefrom by retaining the contaminants in the fibrous structure. Examples of use of the claimed fibrous structure include but are not limited to purification of drinking water or air supplies. Specific examples include use of the fibrous structure in an in-room air fiitration system, in respirators, in automotive air filters, in a clean room, in an operating room, and in industrial settings, such as to remove paint or other particulate matter contained in industrial mists. Additionally, the claimed fibrous structure is useful to remove biological agents, such as anthrax or the smallpox virus, chemical agents, such as nerve gas, or radiological agents, such as those that might be delivered by a radiologically dirty bomb, from drinking water or air supplies. The ability to remove nuclear, biological, and chemical agents (NBC) is required in personal respirators and protective shelters, and in NBC suits that are capable of protecting the wearer from assimilation of agents.

In another example of use, a layer of the nano alumina/coarse fiber composite is placed downstream of the claimed fibrous structure to collect any particles or contaminants that escape during use.

## EXAMPLES

### Examples - Air Filter Medium

The below Examples 12 onward illustrate several embodiments of the present invention.

These examples should not be construed as limiting. Moreover, Reference Examples 1-11 are provided. They are for reference only and outside the scope of the claimed invention. All percentages are by weight. Calculations for determining pore size are provided in the discussion following the Examples.

### REFERENCE EXAMPLE 1

The object of the experiments outlined below was to develop a nano alumina media having a pressure drop substantially equivalent to HEPA media and a filtration efficiency substantially higher than HEPA. It was also an object of the experiments to correlate the nano alumina filter media's water adsorption performance with that of a known HEPA filter media (hereinafter, "the Donaldson HEPA filter") to allow optimization of air filtration using water adsorption data.

Twenty four slurries of nano alumina on microglass mixtures were produced by reacting 5 $\mu$m diameter alumina powder (Valimet Corp. # H-5) in water at 100°C in the presence of mulched borosilicate glass fiber wool of random lengths (Lauscha). Non-woven fiber media containing nano alumina were formed on a 1 x 1 ft sheet mold and were strengthened with 17-23% bi-component fibers (Invista T104, 20 $\mu$m diameter, ½" length) that served as binder. Rhoplex binder was also added, about 2% by weight in liquid form. The sheets were labeled AF1 - AF24.

The filters were tested as a single layer with an air stream having a flow velocity ranging from about 5,6 to about 23 m/min. The surface area available for filtration was about 82 cm$^2$. The filters were compared to the NanoCeram® water filter and the Donaldson HEPA filter in order to compare the characteristics of the inventive nano alumina air or gas filter to a water filter and a conventional HEPA filter.

Table 1 shows the composition, porosity, pressure drop, and average pore size for each hand sheet and the NanoCeram and HEPA media. Figure 13 also shows the pore size and pressure drop for some of the nano alumina filters that were tested. Each filter media shown in Table 1 and Figure 13 was tested as a single layer media. However, in use, performance may be improved by stacking more than one layer

As shown in Table 1, filters AF1-AF12 were comprised of nano alumina fibers mixed with microglass fibers of a single average diameter, either about 0.6 $\mu$m, about 1.5 $\mu$m, or about 2.5 $\mu$m. Filters AF13-AF24 were comprised of nano alumina fibers mixed with a combination of coarse and fine microglass fibers as follows: about 0.6 $\mu$m + about 1.5 $\mu$m; about 0.6 $\mu$m + about 2.5 $\mu$m; or about 1.5 $\mu$m + about 2.5 $\mu$m. The percentage of each fiber size comprising a given nano alumina filter media is indicated in Table 1.

**Table 1. Composition and Property of Nano Alumina Test Filters**

| | %Nano Ceram | % bi-component fibers/ %cellulose | % glass micro Fibers | glass microfiber diameter, $\mu$m | Basis weight g/m$^2$ | Porosity, fraction | Air $\Delta$P @3.2 m/min, mm H$_2$O | Average pore size, (Eq. [3]), $\mu$m |
|---|---|---|---|---|---|---|---|---|
| NanoCeram | 35 | 13/21 | 31 | 0.6 | 160 | 0.88 | 130 | 3.8 |
| AF1 | 3.8 | 24/0 | 72.2 | 1.5 | 156 | 0.93 | 10.4 | 19 |
| AF2 | 11.7 | 22/0 | 66.3 | 1.5 | 170 | 0.92 | 12.3 | 17 |
| AF3 | 20 | 20/0 | 60 | 1.5 | 178 | 0.91 | 13.0 | 16 |
| AF4 | 3.8 | 24/0 | 72.2 | 2.5 | 155 | 0.95 | 4.1 | 35 |
| AF5 | 7.7 | 23/0 | 69.3 | 2.5 | 150 | 0.96 | 4.0 | 37 |
| AF6 | 11.7 | 22/0 | 66.3 | 2.5 | 160 | 0.96 | 4.3 | 38 |
| AF7 | 7.7 | 23/0 | 69.3 | 0.6 | 164 | 0.92 | 125 | 5.2 |
| AF8 | 20 | 20/0 | 60 | 0.6 | 198 | 0.90 | 151 | 4.8 |
| AF9 | 33.3 | 16.7/0 | 50 | 0.6 | 240 | 0.88 | 204 | 4.2 |
| AF10 | 11.7 | 22/13.3 | 53 | 1.5 | 164 | 0.93 | 10.4 | 21 |
| AF11 | 7.7 | 23/13.9 | 55.4 | 2.5 | 144 | 0.94 | 3.4 | 37 |
| AF12 | 20 | 20/12 | 48 | 0.6 | 178 | 0.90 | 134 | 5.1 |
| AF13 | 11.7 | 22/0 | 16.6 49.7 | 0.6 1.5 | 162 | 0.92 | 34.0 | 10 |
| AF14 | 11.7 | 22/0 | 33.2 33.1 | 0.6 1.5 | 168 | 0.91 | 95 | 5.7 |
| AF15 | 11.7 | 22/0 | 49.7 16.6 | 0.6 1.5 | 172 | 0.90 | 105 | 5.4 |
| AF16 | 7.7 | 23/0 | 17.3 52 | 1.5 2.5 | 160 | 0.94 | 5.7 | 28 |
| AF17 | 7.7 | 23/0 | 34.6 34.6 | 1.5 2.5 | 154 | 0.94 | 7.6 | 24 |
| AF18 | 7.7 | 23/0 | 52 17.3 | 1.5 2.5 | 160 | 0.94 | 9.2 | 22 |
| AF19 | 7.7 | 23/0 | 17.3 52 | 0.6 2.5 | 168 | 0.92 | 16.6 | 14 |
| AF20 | 7.7 | 23/0 | 34.6 34.6 | 0.6 2.5 | 158 | 0.90 | 46.6 | 8.7 |

(continued)

|  | %Nano Ceram | % bi-component fibers/ %cellulose | % glass micro Fibers | glass microfiber diameter, μm | Basis weight g/m$^2$ | Porosity, fraction | Air $\Delta$P @3.2 m/min, mm H$_2$O | Average pore size, (Eq. [3]), μm |
|---|---|---|---|---|---|---|---|---|
| AF21 | 7.7 | 23/0 | 52 17.3 | 0.6 2.5 | 158 | 0.91 | 75.5 | 6.4 |
| AF22 | 11.7 | 22/13.3 | 26.5 26.5 | 0.6 1.5 | 168 | 0.92 | 48.2 | 8.8 |
| AF23 | 7.7 | 23/13.9 | 27.7 27.7 | 1.5 2.5 | 146 | 0.93 | 6.7 | 25 |
| AF24 | 7.7 | 23/13.9 | 26.5 26.5 | 0.6 2.5 | 156 | 0.90 | 43.3 | 8.5 |
| HEP A | NA | NA | NA | NA | 48 | 0.84 | 15.5 | 6.0 |
| Note: NA - not applicable | | | | | | | | |

### Relationship Between Microglass Fiber Diameter and Media Porosity

The data of Table 1 illustrate that media being comprised of microglass fibers having small diameters also had lower porosities and small pore sizes. These relationships are further illustrated in Figure 13. For example, media comprised of 0.6 μm microglass fibers had porosities of about 90% and pore sizes ranging from 4.2 to 10 μm. Media comprised of 1.5 μm microglass fibers had porosities of about 92.3% and pore sizes ranging from about 16 to about 21 μm. Finally, media comprised of 2.5 μm microglass fibers had porosities of about 95.3% and pore sizes ranging from about 35 to 38 μm.

The data of Table 1 and Figure 13 also illustrate that media having the largest pore sizes or porosities also had the smallest pressure drops. For example, media having porosities of about 95% had pressure drops of about 3.4 to about 4.3 mm H$_2$O, in contrast to pressure drops of about 125 to about 204 mm H$_2$O for porosities of about 90%.

In examples where the filter media was comprised of a combination of coarse and fine fibers, pore size was not increased as dramatically as it was when the coarse fibers were present alone. See, e.g., Table 1 and Figure 13. For example, 2.5 μm fibers combined with 1.5 μm fibers have pore sizes ranging from about 22-28 μm and porosities of about 94%, with a corresponding pressure drop of about 5.7 to about 9.2 mm H$_2$O.

Notably, the majority of samples AF1-AF24 had a pore size that is greater than the pore size in the Donaldson HEPA filter. For example, AF6 had a pore size that was more than six times greater than the Donaldson HEPA filter pore size.

### Air-Flow Filtration Characteristics

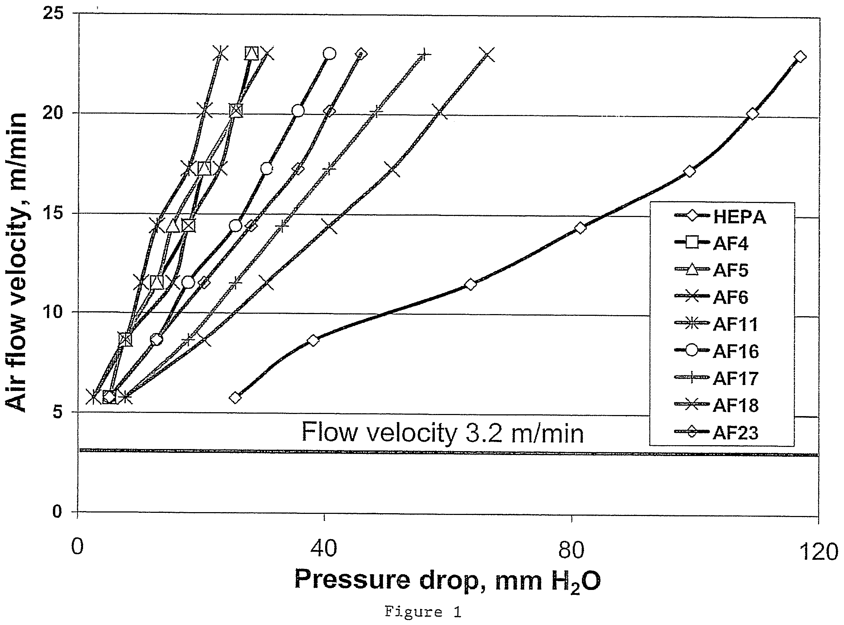

Filters from the set of test filters AF1-AF24 were separated based on their airflow performance. The data for filters having a pressure drop of less than 10 mm H$_2$O at 3.2 m/min are shown in Figure 1. The solid line corresponds to a flow velocity of 3.2 m/min. The results show that there are several formulation variations of the claimed nano alumina fiber material that have a lower pressure drop than HEPA filters. These results are thought to be due to the larger pore size of the new filter media.

### Evaluation of Filtration of Particulate Matter Using Monodisperse latex testing

Traditionally, oil based aerosols such as DOP (Di-octyl phthalate) have been used to simulate liquid aerosols, and sodium (NaCl) or potassium (KCl) chloride aerosols have been used to simulate solid particles when evaluating air filter material. The inventors compared the adsorption of ultrafine monodisperse latex spheres in water with that of HEPA filters and then attempted to establish a correlation based on data from DOP and NaCl tests. Specifically, air filters AF3 (average pore size 16 μm, see Table 1), AF6 (average pore size 38 μm), see Table 1, and the Donaldson HEPA filter, having a diameter of about 25 mm and an effective surface area of about 3.7 cm$^2$, were challenged with a fluid stream of clean (RO) water having 1 μm latex spheres at a constant flow rate of about 0.1 m/min. Although Table 1 describes filter media arranged in a single layer, stacks of one to four layers were used in this experiment in order to optimize performance of the filter media in air and water applications. Influent and effluent turbidity (in NTU or nephelometric turbidity units) in water was measured using a LaMotte Model 2020 turbidimeter.

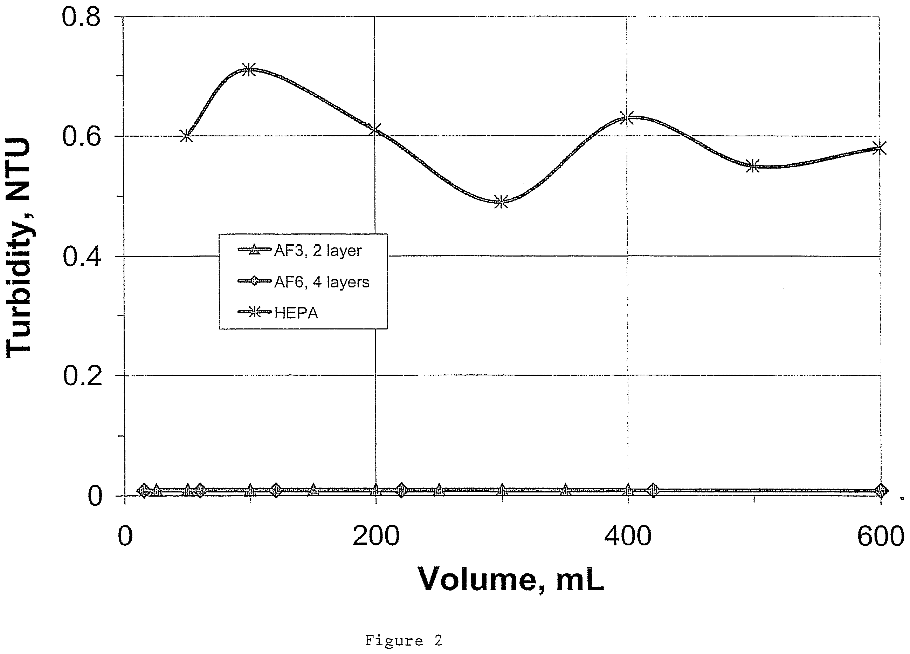

Figure 2 shows a graphical depiction of the turbidity in the effluent leaving filters comprised of nano alumina and microglass fibers compared to a conventional HEPA filter. As shown, the inventive filters comprising the nano alumina and glass fibers exhibited virtually undetectable turbidity in the effluent compared to the HEPA filter.

The results of this experiment were surprising because the inventive filters retained 0.2 $\mu$m particles even though filters AF3 and AF16 had average pore sizes of about 16 and 38 $\mu$m, respectively. It was expected that filters having such large average pore sizes would not be able to retain particles that were so much smaller. The very poor retention of the HEPA filter in the water media was also surprising, indicating that HEPA filters have a much poorer particle retention in water than in air, and thus behave substantially differently in the two environments.

The objective of correlating water adsorption data to air performance was not successful and therefore air filter test data were relied on for subsequent experiments.

## REFERENCE EXAMPLES 2-10

In Reference Examples 2-10, the nano alumina filter media labeled AF3, AF6, AF11, and AF16 were used to further characterize the inventive nano alumina filter media as compared to the Donaldson HEPA filter. As set forth in Table 1, AF3 was comprised of 1.5 $\mu$m microglass fibers, AF6 and AF11 were comprised of 2.5 $\mu$m microglass fibers, and AF16 was comprised of a combination of 1.5 and 2.5 $\mu$m microglass fibers.

## REFERENCE EXAMPLE 2

### Initial DOP and NaCl Initial Particle Penetration

Filters AF3 (average pore size 16 $\mu$m), AF6 (average pore size 38 $\mu$m), AF11 (average pore size 37 $\mu$m), and AF16 (average pore size 28 $\mu$m), manufactured in Example 1, and the HEPA filter, were sent to Nelson Laboratories in Salt Lake City, Utah, for DOP and neutralized monodisperse NaCl aerosol testing. The challenge concentration was $1.5 \cdot 10^6$ particles/cm$^3$ at 32 L/min through 100 cm$^2$ filters. The aerosols had a median particle size of 0.3 $\mu$m which were considered to be in the most penetrating size range. The test samples were prepared in the form of 10 x 10 cm squares or about 4-.5" diameter discs. Three ply or three-layer flat sheets were tightened into the test device and challenged with an air stream at 32 L/min. The data are shown in Table 2.

**Table 2 - Initial Penetration of DOP and NaCl**

| Sample | # plies | DOP/NaCl | Initial airflow resistance (mm H$_2$O) | Particle penetration, % |
|--------|---------|----------|----------------------------------------|--------------------------|
| HEPA | 1 | DOP | 32.8 | 0.02 |
| | | NaCl | 32.8 | 0.025 |
| AF16 | 3 | DOP | 29.1 | 0.513 |
| | | NaCl | 32.1 | 0.323 |
| AF6 | 4 | DOP | 23.4 | 1.27 |
| | | NaCl | 23.6 | 0.755 |
| Af11 | 4 | DOP | 19.5 | 2.72 |
| | | NaCl | 19.4 | 1.60 |
| AF3 | 1 | DOP | 21.2 | 4.12 |
| | | NaCl | 21.3 | 2.61 |

Filter AF16 had the lowest initial NaCl and DOP aerosol penetration, although even this penetration was not comparable to that of the HEPA filter. This sample is composed of a mixture of 1.5 and 2.5 micron microglass and contains only 7.7% nano alumina. It has a pore size of approximately 28 $\mu$m. The results show that many of the nano alumina formulations had an initial penetration higher than the HEPA specification.

**REFERENCE EXAMPLE 3**

**NaCl Aerosol Capacity Testing**

Filters AF3, AF6, AF11, and AF16, and the HEPA filter (100 cm$^2$ test area) were challenged by the NaCl aerosol at a flow rate of 32 liters/min for approximately 3 hours each. About 0.0067 mg/min/cm$^2$ of NaCl was delivered to each filter, which is equivalent to about 40 mg/hr. As described above, typically three layers of AF16(1.2 mm each, total of 3.6 mm) were necessary to achieve the equivalent pressure drop of the HEPA, so the testing was done with three layers vs. HEPA.

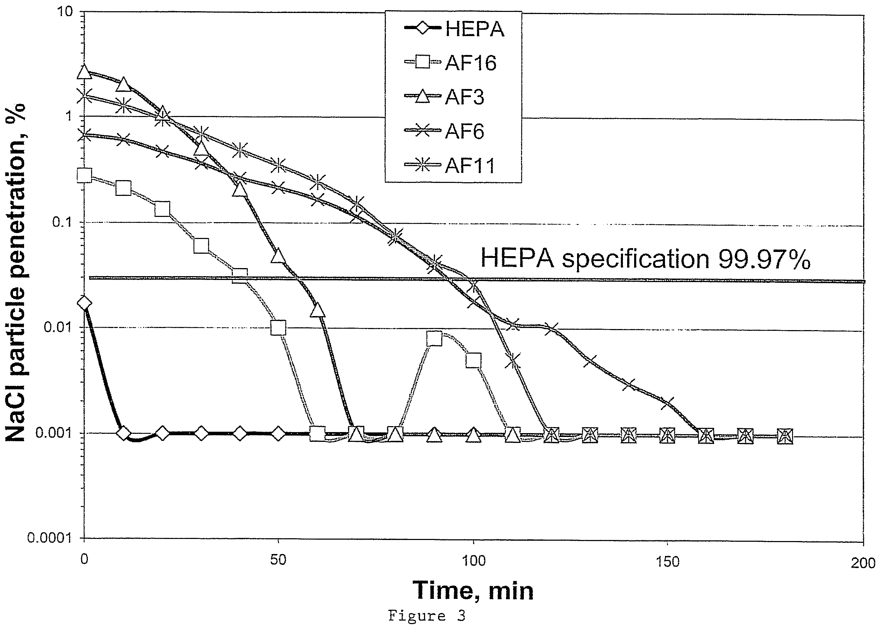

Figure 3 shows a graphical depiction of the penetration of each filter tested by NaCl aerosols as a function of time. As shown, filter AF16 had the lowest initial NaCl aerosol penetration but was still considerably above that of the HEPA. AF16 had the lowest initial penetration and was therefore used for further evaluation.

**Capacity**

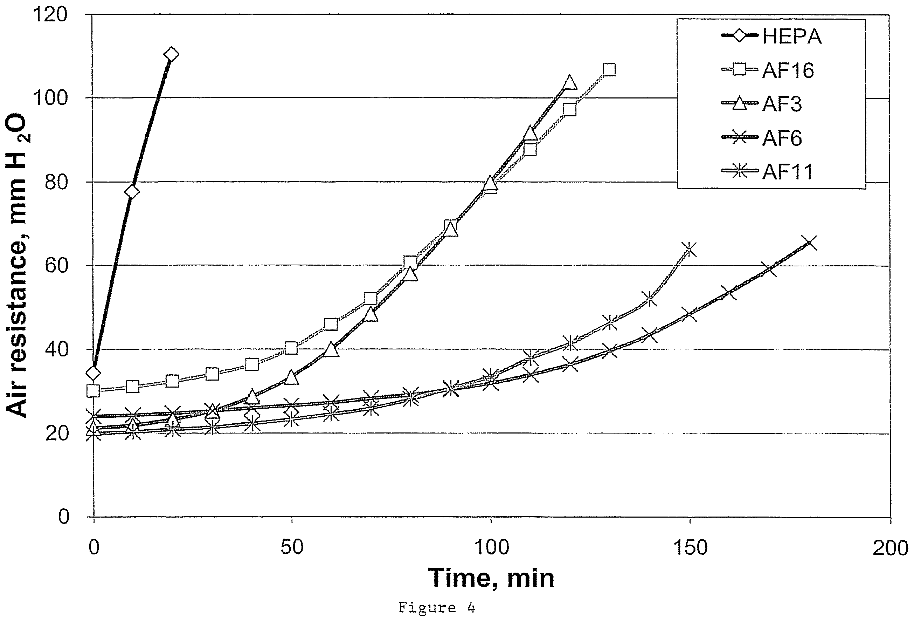

Figure 4 shows a graphical depiction of the air resistance of the filters as a function of time. Capacity (or filter life) in this example is defined as the time (minutes) required to reach a pressure drop ($\Delta$P) of 50 mmH$_2$O. As shown in Figure 4, all of the inventive nano alumina filters tested had a capacity that is at least ten times that of the HEPA filter. Filters AF6 and AF11 have capacities that exceeded that of HEPA by a factor of about 30 times. These data are important because the "lifetime" of a filter is typically defined according to a selected limiting pressure drop across the filter. The pressure buildup across the filter defines the lifetime at a defined level for that application or design. Since the buildup of pressure is a result of load, for systems of equal efficiency, a longer life is typically directly associated with a higher capacity. Efficiency is the propensity of the media to trap rather than pass particulates. Typically the more efficient a filter media is at removing particulates from a gas flow stream, in general the more rapidly the filter media will approach the "lifetime" pressure differential assuming other variables are held constant.

A filter having an increased capacity is of considerable benefit because it reduces the cost of frequent filter change-outs. Additionally, many filters, including those that intercept bacteria and viruses or nuclear materials, have to be disposed of as hazardous waste. Therefore, reducing the frequency with which hazardous waste filters have to be changed and disposed of is a further economic benefit.

Table 3 presents results of the NaCl aerosol tests at air flow rates of about 3.2 m/min for filters disclosed in U.S. Patent No. 6,872,431 to Kohlbaugh ("the '431 patent") and the inventive fibers comprising nano alumina and microglass fibers at a "pre-HEPA" level for removal of 0.3 $\mu$m particles, wherein "pre-HEPA" is defined as a media efficiency ranging from about 98.9% to about 99.6%. Table 3 also presents the results of challenging one of the inventive filters (a single layer of filter AF16) with the most penetrated particle size of 0.33-0.40 $\mu$m of neutralized KCl at a flow rate of about 4.6 m/min.

**Table 3. NaCl (0.3 $\mu$m) Aerosol Penetration of Test Samples at "pre-HEPA"[b] Level**

| Media | Initial particle penetration % | Number of Layers | Single layer efficiency % | Thickness, mm | Time to 125 mm H$_2$O, min | Time to 50 mm H$_2$O, min |
|---|---|---|---|---|---|---|
| US6,872,431 | 0.6[a] | 10 | 40 | 0.54[b] | <170[c] | <80[c] |
| US6,872,431 | 0.4[d] | 14 | 28 | 0.75[b] | <230[c] | <125[c] |
| US6,872,431 | 0.4[a] | 25 | 20 | 1.4[b,c] | <260[c] | <170[c] |
| AF6 | 0.76 | 4 | 80[f] | 1.8 | 320[f] | 160 |
| AF16 | 1.1[g] | 1 | 98.9[g] | 1.2 | 170[f] | 100[f] |
| Notes: (a) this is an estimated value based on equations on the disclosure of the '431 patent, pages 23 -24; (b) these are estimated values based on the data disclosed in the '431 patent, page 35, lines 1-10; (c) these are estimated values based on the data disclosed in the '431 patent, page 43; (d) this is an estimated value based on the data disclosed in the '431 patent, page 39; (e) the estimated thickness exceeds the limit for filter media construction (*see* claim 14, the '431 patent); (f) these are estimated values; (g) this filter was challenged with the most penetrated particle size of about 0.33 to about 0.40 $\mu$m of neutralized KCl at about 4.6 m/min. | | | | | | |

The results shown in Table 3 indicate that at the "pre-HEPA" level:

1. The AF6 media, which is pleatable, has greater capacity to reach a pressure drop of about 125 mm $H_2O$ and about 50 mm $H_2O$ compared to the media disclosed in the '431 patent incorporating either 10, 14, or 25 layers. The life expectancy at 125 and 50 mm $H_2O$ is improved by about 40%, 28%, and 20%, respectively.

2. A single layer of AF16 media has a life expectancy and removal efficiency of the most penetrating particles (KCl, 0.33-0.4 $\mu$m) that exceeds that of the filters disclosed in the '431 patent for 10 and 14 layer composites.

These data are important because they show that the nano alumina fiber media has an increased life expectancy compared to the '431 filter and because their removal efficiency of particles exceeds that of the '431 filter. Thus, not only are the claimed nano alumina filters more cost-effective, they also perform better. Additionally, it is much less costly to manufacture a single media than one with 10-14 different layers, and in the latter case, one has to worry about delamination.

Table 4 presents results of the NaCl aerosol tests at air flow rates of about 3.2 m/min for filters disclosed in the '431 patent and the inventive fibers comprising nano alumina and microglass fibers at a HEPA level for removal of 0.3 $\mu$m particles.

**Table 4. Results of NaCl Aerosol Tests at a HEPA Level**

| Media | Composite efficiency, % | Number of Layers | Single layer efficiency, % | Thickness, mm | Time to 125 mm $H_2O$, min | Time to 50 mm $H_2O$, min |
|---|---|---|---|---|---|---|
| US6,872,431 | 99.97[a] | 16 | 40 | 0.89[b] | <170[c] | <80[c] |
| US6,872,431 | 99.97[a] | 25 | 28 | 1.4[b] | <230[c] | <125[c] |
| AF6 | 99.97[d] | 5 | 80[d] | 1.8 | 300[d] | 140[d] |
| AF11 | 99.976[d] | 6 | 75[d] | 2.5 | 310[d] | 120[d] |
| Donaldson HEPA | 99.975 | 1 | 99.975 | 0.2 | 24 | 3.5 |
| Notes: (a) these are estimated values based on the equations disclosed in the '431 patent, pages 23-24; (b) these are estimated values based on the data disclosed in the'431 patent, page 35, lines 1-10 (note that the estimated thickness exceeds the limit for filter the media construction, per claim 14 of the '431 patent); (c) this is an estimated value based on data disclosed in the '431 patent, page 39, lines 39-45; (d) this is an estimated value. | | | | | | |

The data shown in Table 4 indicate that the AF6 and AF11 media have greater capacities to reach a pressure drop of 125 or 50 mm $H_2O$ compared to the media disclosed in the '431 patent that has 16 or 2.5 layers. The inventive media improves the life expectancy of the filter by at least 80% to 125 mm $H_2O$ terminal pressure with respect to the '431 patent's media, although the '431 patent's media having 25 layers has a comparable life expectancy to a pressure drop of 50 mm $H_2O$.

**REFERENCE EXAMPLE 4**

**Preconditioning**

The objective of this example was to eliminate the initial leakage when tested to a HEPA protocol. It was hypothesized that the largest pore sizes in the filter media (which contains a wide range of pore sizes because of the asymmetric fiber arrangement) were responsible for the initial leakage. It was further hypothesized that injection of a foreign particle into the filter to condition the filter prior to use would flow into the largest of pores, blocking them and thereby reducing this leakage to improve the filter's efficiency.

In order to test this hypothesis, the filters were pre-loaded with a conditioning agent so that pores were plugged prior to use. Sample AF16 (25 mm diameter filter) was used in this test. Monodisperse latex spheres (Duke Scientific) were used to condition the filters because these spheres are stable in air and not affected by a humid air stream. Experiments were carried out in which latex spheres had diameters of either 0.2,0.5, or 1 $\mu$m. The spheres were loaded onto the filter and the air resistance was measured.

Air flow resistance was measured as described above. Preloading with 0.2 $\mu$m spheres had minimal effects on the pressure drop in the inventive filters (data not shown) and after some pre-loading the turbidity of the effluent was measurable.

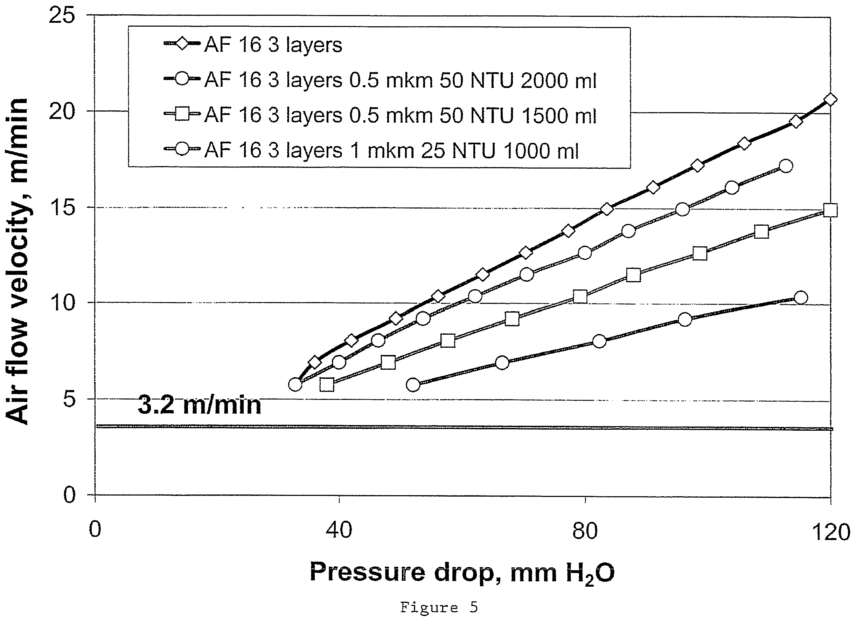

Figure 5 is a graphical depiction of the air velocity and change in pressure after pre-loading the inventive filters with 0.5 or 1 $\mu$m latex spheres. During pre-loading, it was noted that the turbidity of the effluent was below the detection limit of 0.01 NTU, suggesting quantitative adsorption of these larger particles by the filter media. The data suggest that 0.5 and 1 $\mu$m latex spheres are suitable for pre-conditioning the filters with spheres.

In summary, the results of Reference Example 4 show that:

1. Foreign particulates such as monodispersed particulates can be used to condition nano alumina filter media.

2. Measurement of the turbidity during preloading is an effective way to monitor and control the preloading process.

3. Samples can be loaded with 0.5 and 1 $\mu$m latex beads to mirror the pressure drop ($\Delta$P) that occurs during NaCl aerosol testing.

4. The 0.2 $\mu$m latex particle is too small to achieve the desired $\Delta$P.

As an alternative to the costly latex particles, less costly and preferably sub-micron particles, may be used to precondition the filters, including for example, ultrafine granular carbon, fumed silica agglomerates (Cab-O-Sil), or metal oxides.

## REFERENCE EXAMPLE 5

### NaCl Penetration and Capacity Testing for Preloaded AF16 Samples

Test samples were prepared by preloading 0.5 $\mu$m latex spheres onto one face of a filter consisting of 3 layers of AF 16 media. The media was prepared as circular discs with an area of 175 cm$^2$. The samples (100 cm$^2$ test area) were challenged (at Nelson Laboratories) with an NaCl aerosol at a flow rate of 32 liters/min for approximately 3 hours each. The approximate mass of NaCl that was delivered to the filter was 0.0067 mg/min/cm$^2$, or 40 mg/hr or 0.5%/hr of the exposed mass of the filter. At a flow rate of 32 liters/min, the velocity was 3.2 m/min. Filter thickness of three layers AF 16 was about 0.36 cm, resulting in a computed residence time of about 0.07 sec.

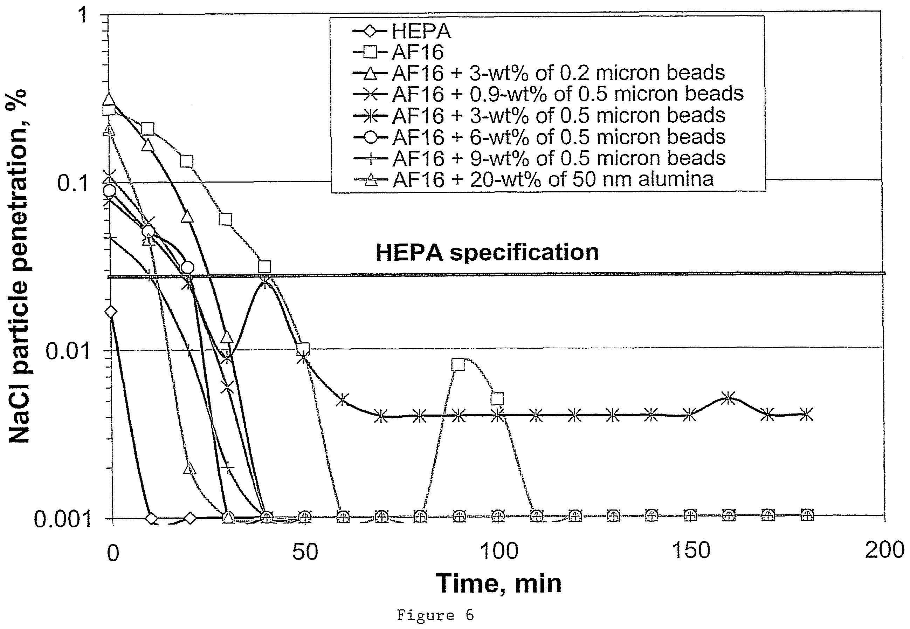

Figure 6 shows a graphical depiction of the air resistance of nano alumina filters preconditioned with latex spheres during NaCl loading. As shown, over the 3 hours of test, the air resistance of all of the nano alumina test samples was much lower than that of HEPA. The HEPA filter reached a $\Delta$P of 50 mm H$_2$O in about 4 minutes, while the nano alumina samples took about 40 minutes to reach the same $\Delta$P (one nano alumina filter that contained 9 wt % latex reached a $\Delta$P of 50 mm H$_2$O in about 30 minutes). This improvement in the filter life, which is about 7-10 ten times greater than HEPA, is a benefit for applications that use high efficiency filters, including hospital, military collective protection, homeland security, automotive and respirator filters.

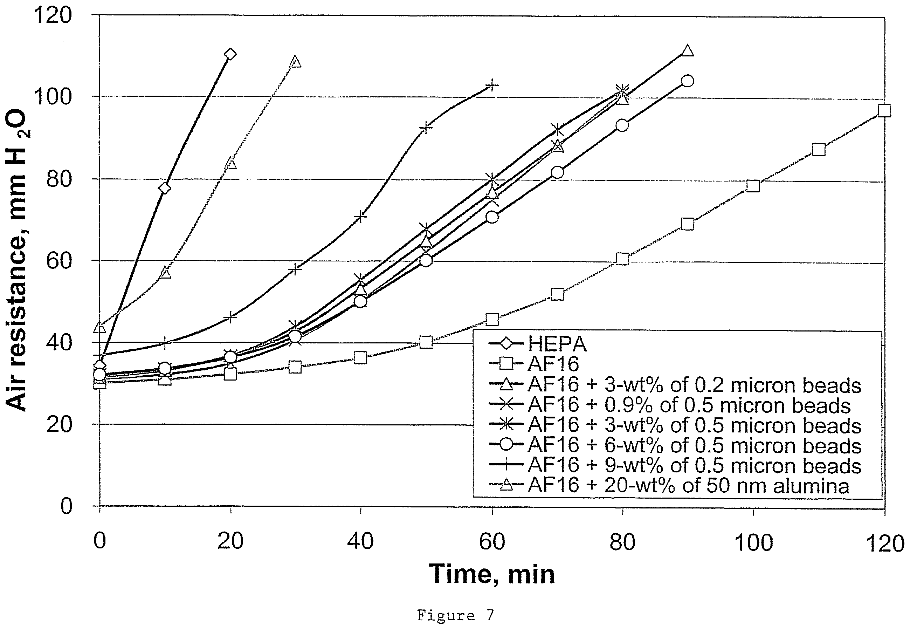

Figure 7 shows a graphical depiction of the NaCl penetration of nano alumina filters preconditioned with latex beads. Although the initial penetration was not reduced to 0.03%, the retention increased with continued loading of the NaCl particles. All of the preconditioned AF 16 samples had lower initial NaCl penetration than AF 16 itself. There is a trend towards better performance with increased preloading of 0.5 $\mu$m latex beads, with the lowest value being 0.047% penetration for 9 wt % latex as compared to the 0,03% penetration that defines HEPA.

## REFERENCE EXAMPLE 6

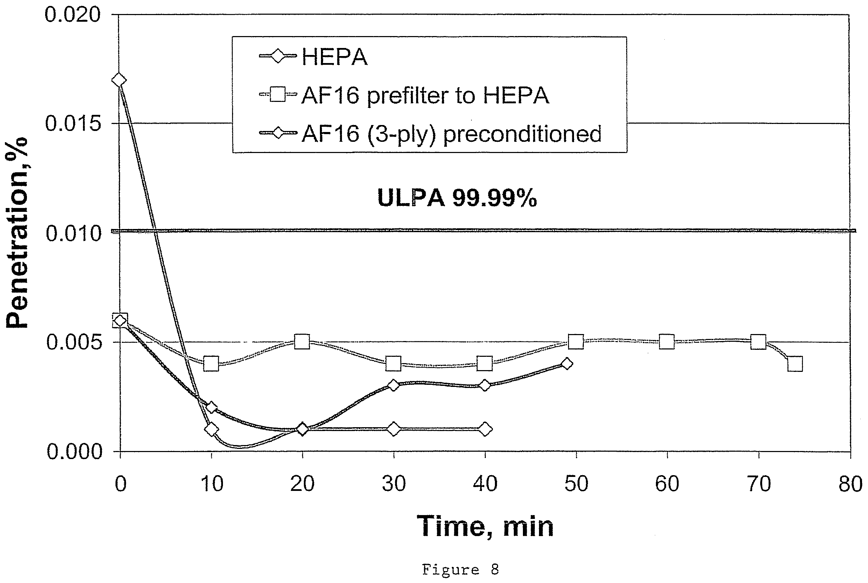

Filter media were tested for NaCl aerosol retention at Nelson Laboratories as in Reference Example 2. Figure 8 shows a graphical depiction of the penetration of 0.3 $\mu$m NaCl aerosols through test media. In this example, the following samples were compared: HEPA; a single layer of AF16 without preloading that was used as a prefilter for the HEPA filter; and three layers of AF16, preconditioned with latex particles. As shown, the HEPA only filter could not be rated as an ULPA. In contrast, the preconditioned AF16 filter had an initial and continued retention of >99.99%, thereby qualifying it as an ULPA filter. Additionally, as shown in Figure 8, adding a single layer of AF16 (not preconditioned) as a prefilter to the HEPA also resulted in an ULPA rating. These data show that the claimed nano alumina filter media have a retention that exceed that of conventional HEPA filters such as the Donaldson HEPA filter, and that using nano alumina as a prefilter increases the HEPA rating to an ULPA rating.

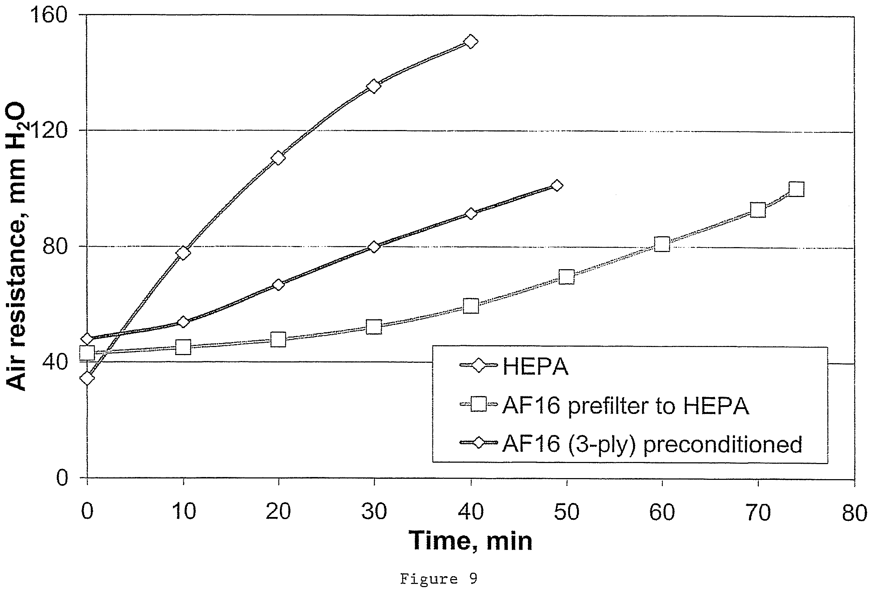

Figure 9 shows a graphical depiction of the air resistance of the test filters during NaCl aerosol capacity test for the samples described above. The addition of a single layer of AF16 without preconditioning extended the life of the HEPA filter by about 700%, to a 50 mm $\Delta$P threshold, which would result in considerable savings if used in practice.

Thus, the claimed filters are more effective at retaining particles and have a greater life expectancy than conventional HEPA filters and therefore these claimed nano alumina filter media are more cost-effective.

**REFERENCE EXAMPLE 7**

Samples of AF16 media were tested at LMS Technologies, Inc. (Edina, MN) in accordance with EPA Method 319 regulations that are specific for measuring filtration systems for paint overspray arrestance in the aerospace industry. In U.S. industrial finishing operations, 30% of paint that is sprayed, amounting to 90 million gallons, is overspray, with much of this dispersed into the atmosphere.

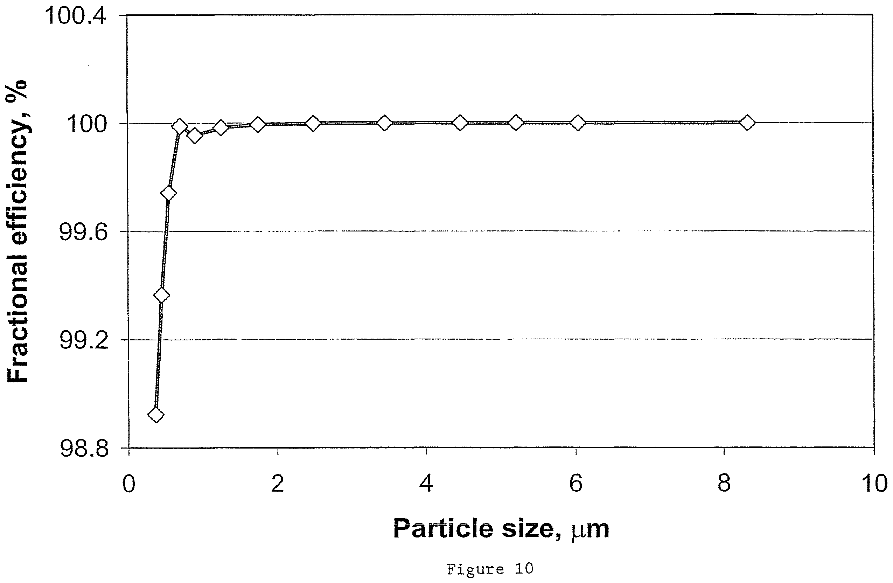

One layer of AF 16 media was tested at a flow velocity of 15 fpm. The initial pressure drop was 22 mm $H_2O$. Figure 10 shows a graphical representation of the retention or fractional efficiency of a test filter as a function of particle size. These same data are presented in Table 5.

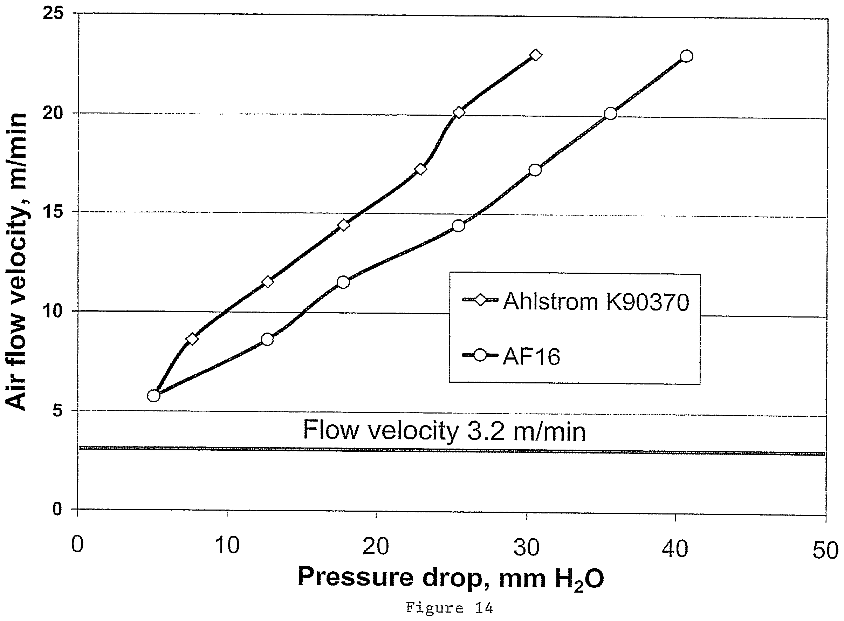

The filter was also compared to a commercial sub-HEPA filter (Trinitex K903 -70, manufactured by Ahlstrom). Figure 14 compares the pressure drop of the Trinitex filter to that of filter AF16. As shown, the pressure drop across the two filters is very similar. Importantly, the retention by the AF16 was extraordinarily better than the EPA specification as well as the Ahlstrom media over all particle size ranges of the comparison. The data show that the new media can substantially improve the performance of sub-HEPA media without requiring preconditioning.

**Table 5 - Retention of KCL aerosols as a function of particle size**

| Size range (μm) | Initial retention by one layer of nano alumina filter media AF16 (%) | EPA 319 Specification | Ahlstrom Trinitex |
|---|---|---|---|
| 0.33-0.40 | 98.923 | | 52% |
| 0.40-0.50 | 99.365 | >75% | 59% |
| 0.50-0,60 | 99.743 | | 63% |
| 0.60-0.80 | 99.989 | >85% | 68% |
| 0.80-1.00 | 99.955 | | 74% |
| 1,00-1.50 | 99.983 | | 90% |
| 1.50-2.00 | 99.995 | >95% | 95% |

**REFERENCE EXAMPLE 8**

A co-pending patent application addresses the use of silver in controlling the proliferation of bacteria. Therefore, the inclusion of silver in the air filtration media was tested here. Three nano alumina handsheets were prepared from aluminum powder as described for sample HF0404 in Reference Example 1, with the exception that silver nitrate (0.1%, 0.3% and 1 wt % as silver to the dry weight of the slurry) was added to the slurry. Samples (25 mm diameter) were mounted in a filter holder and were loaded with 10 ml of $8 \cdot 10^7$ CFU/ml of Klebsiella terrigena suspension in buffered water solution. Bacteria were eluted from the filters in reverse direction with 3 ml of solution containing 3% beef extract and 0.35% glycine solution at Ph 7.5 immediately after loading and then after 1, 5, and 18 hours of dwell.

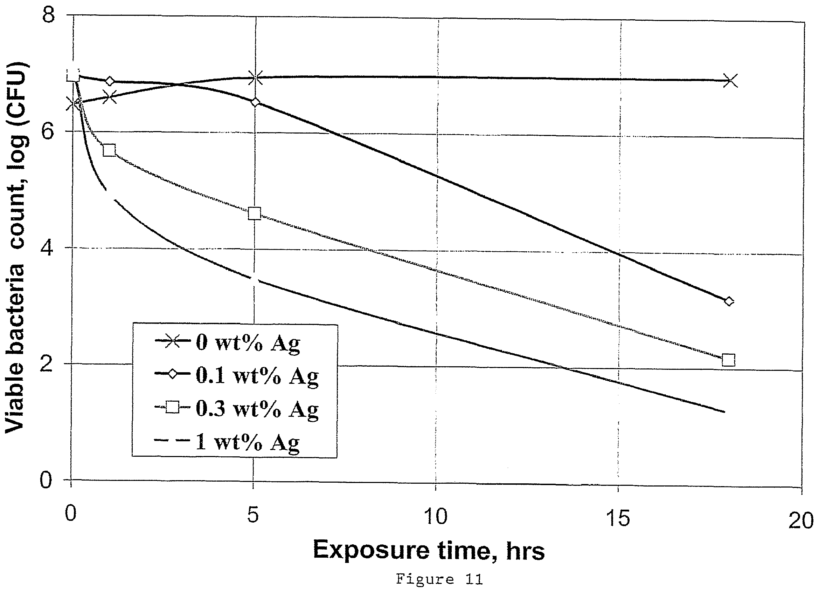

Figure 11 shows a graphical depiction of the antimicrobial effect of the inclusion of ionic silver on nano alumina fibers as a function of time of exposure to the filter. As shown, silver impregnated nano alumina filters controls bacterial proliferation, with improved control as the percent silver nitrate increased.

Tests also showed that 1% silver had no discernable affect on filtering MS2 virus, demonstrating that the virus efficiency of the filter media was not affected after adsorption of the 1% silver.

These results show that addition of silver nitrate to the filter minimizes any re-entrainment of bacteria or virus off the filter because it acts as an antimicrobial agent. The effluent of silver from filters that had been impregnated was about 30 μg/L, substantially below the 100 μg/L required by the EPA for drinking water. Once used, the filter can be disposed of as sanitary waste rather than costly hazardous waste.

**REFERENCE EXAMPLE 9**

**Testing Media Samples with Aerosolized E. Coli Bacteria**

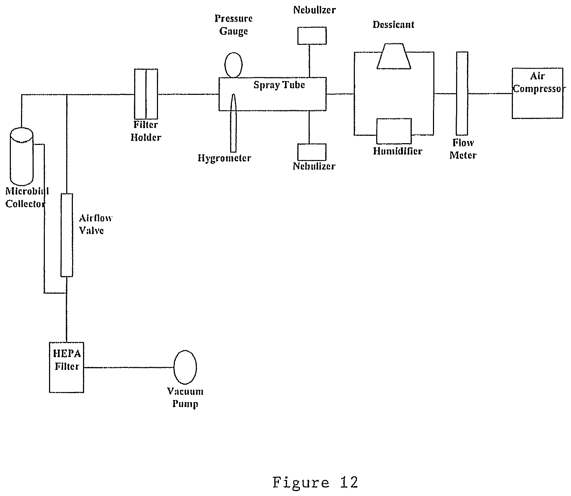

An apparatus originally developed by Henderson [1] has been assembled and tested with E. coli bacteria. In the apparatus, a schematic of which is shown in Figure 12, 5 ml of E. coli $1.4 \cdot 10^9$ CFU/ml suspension in buffer solution was nebulized by a DeVilbiss PulmoMate Nebulizer (Model SR4650D). A second nebulizer was operated with an equal amount of buffer solution. The generated aerosols were injected into a 5 cm diameter, 90 cm long tube. The relative humidity was adjusted by mixing air that passed through the wet and dry arms of the air conditioner before entering the spraying tube. The relative humidity and temperature of the air close to the end of the tube were measured by a humidity meter. Approximately 1/3 of the flow from the outlet of the aerosol tube was passed through the AGI-30 impinger. The rest of the flow was passed through the 12 mm inner diameter tubing and was then combined with the air escaping through the impinger. The air flow was passed through the HEPA filter (Whatman, PolyVent-1000 Cat #6713-1075).

Total flow was 38 liters of air per minute. Two nebulizers produced the airflow of 12 L/min (6 L/min each) and 26 L/min of the airflow was supplied by the air compressor. Airflow through the impinger was 12 L/min.

Filter efficiency was calculated as:

$$\% \text{ Efficiency} = \frac{(\text{Upstream E.coli concentration} - \text{Downstream E.coli concentration}) \times 100\%}{\text{Upstream E.coli concentration}} \quad [1]$$

where the upstream E. coli concentration was determined without the filter in the E. coli laden airstream and the downstream E. coli concentration was determined with the filter in the E. coli laden airstream, at or near 100 % relative humidity.

In the first experiment three layers of the AF16 filter media (not preconditioned with particles) was assembled into a 90 mm diameter filter holder. In the second experiment, one layer of Donaldson HEPA was assembled into the same filter holder. As shown in Table 6, the AF16 filter media had a retention of the bacteria that was about 50 times greater than that of the HEPA filter.

**Table 6. - Percentage efficiency of nano alumina filter against aerosolized E. coli challenge (Condition - 32 LPM, 100% RH, Temperature 23.9° C)**

| Filter media | Thickness, mm, (# plies thickness) | Average Pore size, * $\mu$m | Filter/ No filter | Number of E.coli bacteria determined in AGI-30 buffer solution, CFU | E.coli retention efficiency, % |
|---|---|---|---|---|---|
| AF16 | 3.6 (=3 X 1.2) | 28 | Filter | <1 | >99.9998 |
| | | | No Filter | $5.9 \cdot 10^5$ | |
| AF6 | 7.2 (=4 X 1.8) | 8 | Filter | <4 | >99.9992 |
| | | | No Filter | $5.2 \cdot 10^5$ | |
| AF3 | 0.9 (=1 X 0.9) | 16 | Filter | <4 | >99.9992 |
| | | | No Filter | $5.2 \cdot 10^5$ | |
| AF11 | 1.3 (=1 X 1.3) | 37 | Filter | 4 | 99.994 |
| | | | No Filter | $6.7 \cdot 10^7$ | |
| Donald-son HEPA | 0.4 (=1 X 0.4) | 6 | Filter | 40 | 99.992 |
| | | | No Filter | $5 \cdot 10^5$ | |
| Tαβλε 7 Data from Table 1 | | | | | |

Each AF sample has a pore size that is substantially larger than the pore size of the conventional HEPA air filter. As is generally known in filtration, larger pore size media have less propensity for clogging. This tolerance for clogging would also extend to the ability of the inventive filters to be less resistant to flooring by water droplets.

The demonstrated ability of nano alumina fibers to remove higher levels of bacteria was a surprising result and is a major benefit, particularly where the filter is used for collective protection as in a hospital where immuno-compromised patients are treated, or for protection during a biological warfare attack. Such media would also be beneficial in an improved respiratory filter to improve bacterial retention. A further benefit is the lower pressure drop of the invention as compared to HEPA, particularly as the filter loads. Finally, another advantage is that the pore size of the nano alumina filter media is much larger, resulting in a much more porous filter, allowing it to retain much more water should it be exposed to continuous loading by water droplets or mists.

## REFERENCE EXAMPLE 10

Two experiments were performed as described in Reference Example 9, with the exception that the aerosol contained MS2 virus (25 nm size), and the testing was done at two different relative humidities. In this case the samples tested had a small pore size ($\sim 2 \mu$m) and were 0.4 mm thick.

**Table 7- Percentage efficiency of nano alumina filter against aerosolized MS2 virus**

| Relative Humidity % | Challenge concentration, PFU/ml[a] | Filter/ No filter | Number of MS2 viruses determined in AGI-30 buffer solution, PFU | Detection limit, PFU/ml | MS2 collection efficiency by impinger % | MS2 retention efficiency % |
|---|---|---|---|---|---|---|
| 94 | $2.6 \times 10^7$ | Filter[b] No Filter[6] | <150 $4.2 \times 10^5$ | 100 100 | NA 2.1 | >99.96 |
| 60 | $1.3 \times 10^7$ | Filter[d] | <1 | I | NA | >99.999 |
| | | No Filter[e] | $1.1 \times 10^5$ | 100 | 1.3 | |
| Notes: a) 2 ml of MS2 challenge solution was aerosolized; b) Challenge time -6 minutes; collected volume of virus solution - 1.5 ml; c) Challenge time -10 minutes; collected volume of virus solution - 2.2 ml; d) Challenge time -6 minutes; collected volume of virus solution - 1.0 ml; e) Challenge time -6 minutes; collected volume of virus solution - 1.5 ml. | | | | | | |

Table 7 shows that the filter had a high collection efficiency for aerosolized virus. These results are important because viruses, which are generally one or two orders of magnitude smaller than bacteria, are very difficult to retain by depth filter media. The retention of virus by HEPA is also problematic because many pathogenic viruses are smaller than 0.1 $\mu$m in size, which is substantially smaller than the 0.3 $\mu$m test particle used in defining HEPA. Effective filtration of a monodisperse virus would be very inefficient. If the virus is enveloped in a water aerosol, then HEPA filters that are generally hydrophobic lose efficiency as water accumulates. The claimed nano alumina filter media provides a higher efficiency and capacity and would therefore be useful in filter masks and collective protection systems, such as in hospitals and for biodefense.

**Reference Example 11: Lyocell/NC and Cellulose/NC Handsheets**

Eighty grams of refined lyocell (20% solids), purchased from Fiber Innovation Technology, were dispersed in 0.75 L of RO water, using a kitchen style blender (12 speed Osterizer blender) on a "high-ice crush" setting for 2 minutes. The quantity of aluminum powder added to the mixture (1 g) was such that after reaction the solids would consist of 12 parts AIOOH and 88 parts lyocell fibers (sample AF34 in Table 16a). Similarly the quantities of aluminum powder added to the mixture (2 g) and 1 g of fumed silica dry powders before aluminum-water reaction were such that after reaction the solids would consist of 20 parts AIOOH, 5% fumed silica and 75 parts lyocell fibers (sample AF35 in Table 8). As a control, the handsheets of pure lyocell (AF33), cellulose (AF28) and a mixture of 72% cellulose and 28% AIOOH (AF32) were prepared.

**Table 8 - Composition and properties of lyocell/cellulose containing handsheets and results of MS2 retention**

| Sample # | Composition | Basis weigh 1 g/m$^2$ | Breaking length, m | Porosity, fraction | Average pore size, $\mu$m | Number of layers | MS2 retention[3] % |
|---|---|---|---|---|---|---|---|
| AF28 | 100% Cellulose | 166 | 460±28 | 0.82 | 8 | 3 | 0% |
| AF32 | 72% Cellulose+ 28%NC[b] | 229 | <10 | 0.89 | 13 | 3 | 20% |
| AF33 | 100% Lyocell | 166 | 1022±136 | 0.50 | 1.8 | 1 2 3 | 0% 10% 20% |
| AF34 | 88% Lyocell+12%NC[b] | 188 | 1013±19 | 0.50 | 2.0 | 1 2 3 | 99.9994 >99,9997 >99.9997 |

(continued)

| Sample # | Composition | Basis weigh 1 g/m$^2$ | Breaking length, m | Porosity , fraction | Average pore size, $\mu$m | Number of layers | MS2 retention[3] % |
|---|---|---|---|---|---|---|---|
| AF35 | 75% Lyocell+5% Cab-O-Sil+20%NC[b] | 183 | 906$\pm$44 | 0.50 | 1.8 | 1<br>2<br>3 | >99.9997<br>>99.9997<br>>99.9997 |
| Notes: a) 2.0 • 10$^7$ PFU/ml challenge solution of MS2 and was prepared. A 10 ml aliquots of MS2 suspension were filtered through 25 mm diameter discs at flow rate of 40 ml/min; b) NanoCeram ||||||||

Discs (25 mm) were cut from samples, as described above, and were challenged with MS2 viruses at an input concentration of 2.0 • 10$^7$ PFU/ml and at flow rate of 40 ml/min. Table 8 shows that the handsheets made from pure cellulose, microfibrillated cellulose (lyocell), or a 72%cellulose/28%NC mixture, have no or very little MS2 virus removal efficiency. The 88%lyocell/12%NC and 75%lyocell/5%Cab-O-Sil/20%NC mixture have efficiencies even greater than a single layer ofNC (99.5%, see Table 16), indicating that lyocell is an excellent fiber support for the nano alumina.

### Reference Examples - Fibrous Structure

The Examples provided below show the incorporation of fine, ultrafine, or nanosize particles into a non-woven structure. Examples include a sorbent, a catalyst, powdered activated carbon, a nanosize carbon, RNA, TiO$_2$ particles (50 nm), and fumed silica (primary particle size approximately 15 nm, as agglomerates several hundred nanometers large). In each case, the forming time is substantially less when nano alumina is used, making it practical to manufacture the new media by wet forming (paper making) methods.

Examples are also provided that compare the claimed fibrous structure containing powdered activated carbon to that of commercially available activated carbon media by comparing the breakthrough of soluble iodine through the respective media. The breakthrough through a single layer of approximately the same basis weight of the commercial media is almost immediate, whereas the claimed filtration medium has a life that is about 800 times greater.

### EXAMPLE 12: Starting Materials

Slurries of nano alumina on coarse fibers such as microglass or lyocell were prepared from aluminum powder. Briefly, two grams of microglass fibers (Lauscha Fiber International, borosilicate glass, grade B-06-F, 0.6 $\mu$m diameter) were dispersed in 0.75 L of permeate from a reverse osmosis water generator, using a kitchen style blender (12 speed Osterizer blender) on a "low-clean" setting for 2 minutes. Quantities of 1.36 g and 0.61 g, respectively, of aluminum powder (Atlantic Equipment Engineers, grade AL.-100, 1-5 $\mu$m) were added to glass microfibers such that after reaction they would produce respectively 60 parts AIOOH/40 parts microglass and 40 parts AIOOH/60 parts microglass.

Ammonium hydroxide (8 ml of 36% per 750 ml of much) was added to initiate the reaction of aluminum with water to form the AIOOH and hydrogen. The mixture was heated to boiling and kept at boiling for 10 minutes until the mixture turned white (unless the added particle is black), and was then cooled and neutralized to approximately pH 7 using hydrochloric acid. The result is nano alumina formed onto the coarser fiber (hereinafter, "NC" mixture), such as microglass or lyocell, described in the subsequent examples.

Next, the sorbent particles are added as a dry powder or a suspension of powders (e.g. TiO$_2$) in water to the slurry of nano fibers and coarse fibers, either before or after the aluminum-water reaction. The slurries were then manually mixed.

The following examples show the claimed fibrous structure comprising nano size particles, including: amorphous fumed silica (average particle size (APS) ~15 nm, Cabot Corp., Cab-O-Sil, grade M5), TiO$_2$ powders with APS ~50 nm, that are produced in Russia and sold by Argonide Corp, and ribonucleic acid (RNA), with the smallest dimension is less than about 1 nanometer. Other examples are given where the particle is a sorbent (PAC) obtained from Calgon Carbon (WPH grade, 99% -100 mesh, 95%-200 mesh and 90%-325 mesh, APS ~28 $\mu$m), and 30 nanometer carbon nano powders obtained from Aldrich (Cat. #633100).

In other examples, Arizona test dusts, principally composed of silica, were added to the NC mixtures. Two different grades of the Arizona test dusts were used, 0-3 $\mu$m (APS 1.13 $\square$m) and 0-5 $\mu$m (APS ~2 $\mu$m), both available from PTI Powder Technology Inc.

An example is also shown for a catalyst added to the NC mixture, Carulite-400 (type C), which is a copper activated manganese dioxide powder (Hopcalite type) with particle size of 3-8 $\mu$m, available from Carus Chemical Company.

The ratio of the particle to the nanoalumina/coarse fiber ("NC") network is dependent on the desired performance properties of the media. For instance, there are trade-offs on the ability of a PAC-NC composite to remove organic versus particulate contaminants that would alter the selected PAC content. A PAC-NC composite that has a reduced amount of PAC increases the ability of the fibrous structure to remove bacteria, viruses, and other contaminants from the fluid stream, thus yielding, for example, drinking water that is substantially sanitized from microbials as well as removing soluble contaminants including chlorine, halogenated hydrocarbons, and toxic soluble metals.

Other fibers such as cellulose or polyester bicomponent may be added for the purpose of strengthening the fibrous structure and making it more flexible.

## EXAMPLE 13: Formation of Furnishes

In this example, two grams or 1.3 grams of particles as described in Example 12 (i.e., amorphous fumed silica, RNA, Carulite, fine test dust, nanocarbon and PAC, and $TiO_2$) were added to the 60/40 or 40/60 NC slurries prepared as described in Example 12 to produce NC-slurries containing 28-wt% particulate powders. The slurries were manually mixed. Similarly, 5 g and 3.33 g of the powders listed above were added to the 60/40 and 40/60 slurries to produce 50-wt% particulates powder loading. With the exception of $TiO_2$ loaded NC structure (see below), the powder was added after the reaction was initiated. In all examples, experiments were run adding particles before and after the reaction was initiated in order to evaluate when the optimal time is to add particles to the mixture. However, where particles comprise fine dust (Table 9), Carulite (Table 11), or RNA (Table 13), particles are added after initiating the reaction in order to avoid denaturing the particles. In the case of PAC (Tables 14, 15), the particles are added either prior to or after initiating the reaction.

The mixtures were then diluted with RO water in a ratio of 2000:1. A 500 ml aliquot of the slurry was poured into a 47 mm vacuum filter holder. The furnish was filtered through a 47 mm diameter filter disc punched out from a woven Teflon media (70 mesh size) placed onto the filter holder. Vacuum from a rotary pump was applied to the water collection reservoir and the forming time (the time from the start of the filtration step until all fluid was passed through the formed disc) was recorded as forming time. The finished discs were oven dried and weighed after cooling and after reaching equilibrium with the laboratory air. In some cases, the latter weight was recorded and the total weight was compared to the weight of the original components in order to estimate the yield of particles on the NC substrate.

## EXAMPLE 14: Nano $TiO_2$/Nano alumina/microglass fibrous structures

Five (5) g of 50 nm $TiO_2$ nanopowders were dispersed in a glass beaker filled with 1 L of RO water and then agitated in an ultrasonic generator (Fisher Scientific, Model F20) for 30 min. After 24-hr stand, the top portion (~0.6 L) of the supernatant was slowly decanted to separate the suspended particles from any agglomerates settling down.

One hundred ml aliquots of the above $TiO_2$ suspension were added to a 0.75 L of NanoCeram 60/40 that had been previously formed as in Example 12. Two control mixtures were used, one containing 0.85 L of $TiO_2$ water (to measured weight) and a second containing microglass (no nano alumina) in 0.85 L. The concentration of $TiO_2$ nanopowders was determined by evaporating the water and weighing the residue. Similarly two hundred ml aliquots of the above $TiO_2$ suspension were added to a 0.75 L of the 60/40 furnish prior to aluminum-water reaction. Control mixtures of 0.95 L of $TiO_2$ in water (to measure weight) and a second containing microglass (no nano alumina) in 0.95 L. The concentration of $TiO_2$ nanopowders in the controls was also determined by evaporating the water and weighing the residue.

Table 9 shows the composition of the furnishes, their forming time and the turbidity of the collected effluent.

### Table 9 - Forming of nano $TiO_2$-containing non-woven

| Sample # | % Nano alumina[a] | % glass micro fibers[a] | % $TiO_2$ particles | Forming time, min | Effluent turbidity, NTU |
|---|---|---|---|---|---|
| 628 | 56 | 38 | 7[b] | 0.7±0.2 | 20 |
| 629 | 0 | 94 | 7[b] | 2.2±0.6 | 114 |
| 643 | 53 | 35 | 12[c] | 1.0±0.2 | 40 |
| 644 | 0 | 88 | 12[c] | 23±6 | 132 |
| Notes: a) ratio of nano alumina/microglass is 60%/40%; b) $TiO_2$ powders were added to 60/40 furnish that had been previously formed; c) $TiO_2$ powders were added before the aluminum-water reaction had been initiated. | | | | | |

Samples 628 and 643, which included nano alumina in the mixture, had a much more rapid forming time than samples 629 and 644, which did not have any nano alumina added to the mixture. A comparison of the turbidity of the respective elluents shows that when nano alumina is present, there is greater retention of the nano particle into the fibrous structure.

The average pore size of the titanium dioxide containing fibrous structure, based upon water flow measurements as shown in Examples 1-10 above was estimated to be about 3 $\mu$m. Yet it is able to contain about 7-12 % of its basis weight of a particle that is almost two orders of magnitude smaller than the pore size of the finished media. Without being bound by theory, the forming time is reduced because the nanoparticles are tightly bound to the NC structure and do not constrict flow, while in the absence of nanoalumina, the nanoparticles are free to agglomerate within the pore structure, thickening the mixture and impeding flow.

Other nano size oxides and refractory compounds such as carbides, nitrides or nano diamond could be similarly retained in such a structure. For instance, pigment oxides and light sensitive nano materials could be incorporated into such a fibrous structure, and a fibrous structure containing nano diamond or nano tungsten carbide could be used as a polishing cloth for high precision surface finishing. The structure would not only serve to distribute and suspend the abrasive, but it would also serve as a collector of debris developed during polishing.

## EXAMPLE 15: Silica/NC/microglass filter fibrous structure

A fibrous structure containing silica (Table 10) was prepared as described in Example 13. In two samples (sample 630 and 642), fumed silica was added to the furnish. Fumed silica is known to form colloidal suspensions that are very difficult to filter. It is used extensively as a thickener.

In sample 630, the fumed silica was added before the reaction. Of the initial solids, equivalent to approximately 200 gm/m$^2$, only 63 g/m$^2$ was collected on the filter. That amounts to approximately 90% of the original alumina and fumed silica added, leaving only the microglass fibers to be retained on the 70 mesh filter. We hypothesize that adding the fumed silica at the beginning results in its combining with the nano alumina as it is being formed, with the result that there was little or no adherence of the nano alumina to the microglass, causing the loss of both silica and nano alumina to the effluent.

**Table 10 - Forming of NC non-wovens with silica particles**

| Particle | Particle size, $\mu$m | Sample # | % Nano alumina[a] | % glass micro fibers[a] | Wt% silica, initial | Forming time, min | Basis weight g/m$^2$ | Particle losses, % |
|---|---|---|---|---|---|---|---|---|
| Fumed silica | 0.01 | 630 | 43 | 29 | 28[b] | 1.3 | 63[c] | ~90[d] |
| | | 631 | 0 | 72 | 28 | > 100[e] | NA' | NA' |
| | | 642 | 43 | 29 | 28[g] | 1.2 | 212[c] | 0 |
| Fine test dust, 0-3 $\mu$m | 1 | 632 | 43 | 29 | 28[b] | 1,5 | 217[c] | 0 |
| | | 633 | 0 | 72 | 28 | 35 | 140[c] | ~80" |
| Fine test dust, 0-5 $\mu$m | 2 | 634 | 43 | 29 | 28[b] | 0.6 | 200[c] | 0 |
| | | 635 | 0 | 72 | 28 | 13 | 140[c] | ~80[h] |

Notes: a) ratio of NC/microglass is 60%/40%; b) powders were added before the aluminum-water reaction; c) target basis weight is 200 g/m$^2$; d) both, NC and silica were lost as NC-silica aggregates; e) filtering terminated after 100 min where only 40% of mixture passed through the filter disc f) data not attainable g) powders were after the aluminum-water reaction; h) almost all silica particles were lost.

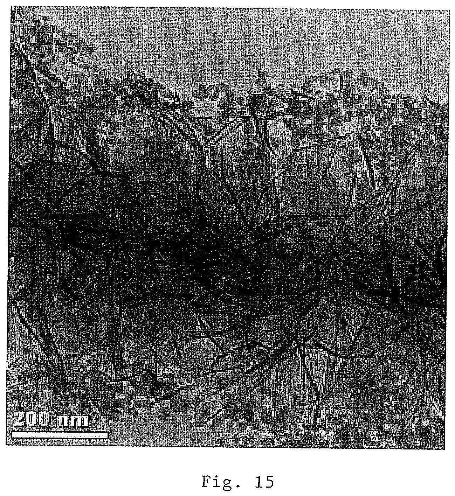

In sample 642, fumed silica was added after the aluminum-water reaction. In this case, the forming time was very rapid, and there was no loss of weight. This demonstrates a method for retaining fumed silica, with its very high surface area (200$\pm$25 m$^2$/g), into a fibrous structure. Figure 15 is a transmission electron microscopic view of same 642. The nanofibers appear as whiskers estimated from this and other micrographs to be 2-3 nanometers in diameter with a length of several hundred nanometers. Spheres of nano silica appear along the axis, completely enveloping the nano alumina/microglass composite.

In sample 631, the control without nano alumina, the fumed silica formed a colloid which clogged the mesh, considerably extending the forming time to greater than 100 minutes.

Samples 632 through 636 represent media produced by adding test dusts that are used extensively in filter development and are comprised mostly of micron size silica. The test dust was added prior to the aluminum reaction.

When there was no dust added to the mixture, the loss of particles into the effluent was substantially complete and when dust having sizes of 0-3 or 0-5 μm was added to the mixture, the loss of particles into the effluent was substantially zero. Additionally, the forming time was 35 and 22 times greater, respectively, for the 0-3 and 0-5 μm dusts, without the nano alumina than with it being present in the furnish.

The attached fumed silica can function as a sorbent or be chemically manipulated by reaction to attach organic ligands.

### EXAMPLE 16: Catalyst

Testing of Sample 634, shown in Example 15 above, was repeated in this example, with the exception that Carulite, a copper activated $MnO_2$ catalyst, was substituted for the silica. The forming time, as shown in Table 11 shows that the addition of Carulite catalyst to the NC furnish has a forming time which is a fraction of that furnish without the nano alumina. A short forming time is related to freeness and is vital in continuous manufacture of non-woven media by wet forming methods.

The resulting catalyst would be more efficient than granular forms, allowing shallower bed depths to achieve oxidation of carbon monoxide or ozone because the larger surface area of the catalyst compared to that of a large granule results in faster reaction of, e.g., gas phase components.

The catalyst could also be a precious metal such as nanosize platinum attached to the nano alumina. Both the nano alumina and the microglass supporting structure are stable at approximately 150°C and above so that the NC/platinum catalyst structure is also stable. At temperatures starting at about 150°C, nanosize platinum is capable of oxidizing contaminants such as carbon monoxide and unburned hydrocarbons from gases including automotive exhausts.

**Table 11 - Forming of NC non-woven with a catalyst**

| Particle | Primary particle size, μm | Sample # | % Nano alumina[a] | % glass micro fibers[a] | Wt% Carulite particles | Forming time, min |
|---|---|---|---|---|---|---|
| Carulite 400, Type C | 3-8 | 624 | 43 | 29 | 28[b] | 1.1±0.4 |
| | | 625 | 0 | 72 | 28 | 4±1 |
| Notes: a) ratio of NC/microglass is 60%/40%; b) powders were added before the aluminium-water reaction. | | | | | | |

### EXAMPLE 17: Nanocarbon

Testing of Sample 634, shown in Example 15 above, was repeated in this example, with the exception that nanocarbon particles were substituted for the silica. Table 12 shows that nanocarbon loaded NC furnish has a forming time which is a fraction of that furnish without the nano alumina. No difference in forming time was noted when the nanocarbon was added either before or after the NC was formed.

Such forms of carbon, suspended in a non-woven, would have sorption properties exceeding GAC, and perhaps also PAC.

**Table 12 - Forming of Nanocarbon-containing NC**

| Particle | Primary particle size, μm | Sample # | % Nano alumina[a] | % glass micro fibers[a] | Wt % nano carbon | Forming time, min |
|---|---|---|---|---|---|---|
| Nanocarbon | 0.03 | 645 | 43 | 29 | 28[b] | 0.45±0.10 |
| | | 646 | 0 | 72 | 28 | 2.0±0.5 |
| | | 647 | 43 | 29 | 28[c] | 0.5±0.1 |
| Notes: a) ratio of NC/microglass is 60%/40%; b) powders were added before NC formation; c) powders were added after NC formation | | | | | | |

### EXAMPLE 18: RNA

Testing of Sample 634, shown in Example 15 above, was repeated in this example, with the exception that RNA (Ribonucleic acid from Torula yeast, available from Sigma, Cat # R6625) was substituted for the silica. As shown in Table 13, RNA loaded NC furnish has a forming time that is about 8% of that furnish without the nano alumina

**Table 13 - Forming of Bio-Engineered Nanostructures**

| Particle | Particle size, $\mu$m | Sample # | % Nano % glass micro alumina[a] fibers[a] | | Wt%RNA | Forming time, min |
|---|---|---|---|---|---|---|
| RNA | 0.001[c] | 648 | 4.3 | 29 | 28[b] | 0.45±0.10 |
| | | 649 | 0 | 72 | 28 | 5,5±0.5 |
| Notes: a) ratio of NC/microglass is 60%/40%; b) powders were added after the aluminum-water reaction. c) RNA minimum dimension | | | | | | |

This example demonstrates that nano alumina fibers can attach elementary biological particles that could be incorporated into a fibrous structure to provide a biological function. In an example, biologically active components such as growth factors are incorporated into medical structures such as non-woven wound dressings to enhance healing. In a further example, nano silver particles are added to such dressings to serve as an antimicrobial. In another example, the fibrous structure is used to deliver nutritives and drugs to permeate the epidermis. In still other examples, a fibrous structure could also is used to sense where a specific nucleic acid or protein, attached to the non-woven, can interact with a specific biological or chemical agent.

In still other examples, artificial macromolecular particles, including for examples, polymer particles having specific functional groups, are also distributed and fixed into a non-woven format. In examples, bacteria are attached to serve as a biocatalyst. Bacteria suspended in a non-woven maintains viability because of the ease of perfusion of oxygen, carbon dioxide and waste products through the media.

## EXAMPLE 19: Powdered Activated Carbon

Testing of Sample 634, shown in Example 14 above, was repeated in this example, with the exception that powdered activated carbon (PAC) was substituted for the silica. As shown in Table 12, the fibrous structure comprising PAC has a forming time which less than 5% of that furnish without the nano alumina.

**Table 14 - Forming of PAC mixtures**

| Particle | Sample # | % Nano alumina | % glass micro fibers | % particles estimated at start | Forming time, min | Basis weight g/m$^2$ |
|---|---|---|---|---|---|---|
| Calgon PAC | 650 | 43[a] | 29[a] | 28 | 0.6 | 198[b] |
| | 651 | 0 | 72 | 28 | 13 | 200[b] |
| Notes: a) ratio of NC/microglass is 60%/40%; b) target basis weight is 200 g/m$^2$ | | | | | | |

## EXAMPLE 20: Lyocell

Two grams of refined lyocell, purchased from Fiber Innovation Technology, were dispersed in 0.75 L of RO water, using the blender described in Example 12 on a "high-ice crush" setting for 2 minutes. The quantity of aluminum powder added to the mixture (0.61 g) was such that after reaction the solids would consist of 40 parts AlOOH and 60 parts lyocell fibers. Dry PAC powders were added before aluminum-water reaction and the slurries were then manually mixed in a 1 L beaker and the aluminum-water reaction was carried out as in Example 12.

Table 15 shows the composition of a PAC-containing furnish and one without nano alumina. The forming time of the PAC version is 16% when containing nano alumina. The influent turbidity of the PAC-NC furnish was 10 compared to an influent turbidity of 360 NTU without nano alumina, apparently as a result of rapid integration of the PAC with the other fibers. Macro fibrous agglomerations were visibly formed in the stock solution when nano alumina was present. It was noted that settling was very rapid when a half liter of stock solution of PAC-NC was mixed in a 750 ml beaker, and settling occurred within the beaker within 30-40 seconds, eventually clearing about 80% of volume of the supernatant to a turbidity less than 10 NTU, while the PAC/lyocell (without nano alumina) mixture did not settle for several hours. It was also noted that the effluent turbidity in the case of PAC-NC was approximately 12 times less than when nano alumina was absent, with the result that a large fraction of activated carbon particles go into the drain. It is likely that these would be the smallest of the particles, and the ones most likely to contribute to rapid adsorption kinetics. The ability of the NC to form aggregates with PAC, resulting in a high yield of composite, was clearly demonstrated with lyocell as a substitute for microglass.

**Table 15 - Forming of PAC mixtures with lyocell**

| Particle | Sample # | % Nano alumina | % lyocell Fibers | % PAC | Forming time, min | Influent turbidity, NTU | Effluent turbidity, NTU |
|---|---|---|---|---|---|---|---|
| Calgon PAC | 652 | 29 | 43[a] | 28 | 0.8±0.1 | 10±2 | 1.1±0.2 |
| | 653 | 0 | 72 | 28 | 5.0±1.4 | 360±40 | 13±2 |

## EXAMPLE 20: PAC Handsheets

In this example, various handsheets were prepared from furnishes as in Example 20, except that the components were increased for the larger area test samples. Additionally, in this example, bicomponent fiber (Invista T105) and cellulose were added to improve flexibility and strength. The cellulose was added before the aluminum water reaction was initiated, and the bicomponent was added after the furnish was cooled and neutralized to about pH 7. Finally, in this example, the furnish was diluted to 500:1 rather than the 2000:1.

Handsheets, 12" X 12", were prepared using a headbox with suction of water through a screen to form the paper like sheet. The handsheet was air dried at room temperature. In samples where a polymeric fiber such as bicomponent was used, the handsheets were oven dried and cured at 160°C for twenty minutes. A handsheet with pure NanoCeram media without any carbon, denoted as NC in Table 16, was prepared in a similar fashion.

**Table 16. Composition and properties of PAC containing handsheets**

| Media | % AIOOH | % Cellulose | % poly ester fibers | % glass micro fibers | % PAC | Thickness mm | Basis weight g/m$^2$ | Average pore size, $\mu$m |
|---|---|---|---|---|---|---|---|---|
| 616 | 15 | 9 | 8 | 16 | 52 | 1.2 | 276 | 3.8 |
| 617 | 14 | 8 | 8 | 13 | 57 | 1.2 | 269 | 3.7 |
| 618 | 15 | 9 | 16 | 14 | 46 | 1.5 | 287 | 4.8 |
| 619 | 12 | 7 | 25 | 12 | 44 | 2.2 | 356 | 5.8 |
| 620 | 12 | 7 | 14 | 12 | 55 | 1.2 | 297 | 3.9 |
| 621 NC | 11 37 | 7 20 | 27 13 | 11 30 | 44 0 | 1.9 0.8 | 322 220 | 6.8 2.4 |

Pore size is determined as described above in Examples 1-10. The pore size of all test samples is larger than that of nanoalumina/microglass filters, resulting in less pressure drop and higher flow rate capability.

## EXAMPLE 22

The purpose of this series was to measure retention of microbes by the fibrous structure and to compare it to filters comprising only nano alumina/microglass. A 25 mm disc was cut from sample number 617, described in Example 21 and Table 16 above. Another 25 mm disc was cut from NC media. The discs were challenged with a solution of Brevundimonas diminuta (available from ATCC, Cat. No 11568). B. diminuta is the smallest culturable bacteria, having a minor dimension of only 0.3 $\mu$m. Both types of samples were challenged with a 10 ml aliquot of bacteria at a rate of 40ml/min, were collected into sterile vials, and were then assayed for B. Diminuta. While the PAC-NC was capable of 99% retention (Table 17), the NC without the PAC was superior. Reduction of the PAC from its high level (57%) enhances bacteria retention. Both types of filters were also challenged with MS2 viruses (available from ATCC, Cat. No 15597-B1) that are 25 nanometers in size. Table 18 shows that the PAC-NC has almost equivalent virus retention to NC.

**Table 17 -B. Diminuta retention by NC and PAC/NC media**

| Media | Thickness, mm | Basic weight, g/m$^2$ | Input concentration, CFU[a]/ml | B. Diminuta removal[b], % |
|---|---|---|---|---|
| 617[c] | 1.2 | 269 | $1\cdot10^4$ | 99 |

(continued)

| Media | Thickness, mm | Basic weight, g/m$^2$ | Input concentration, CFU[a]/ml | B. Diminuta removal[b], % |
|---|---|---|---|---|
| NC | 0.8 | 220 | 7-10$^5$ | 99.95 |
| Notes: a) Colony Forming Units (CFU); b) a 10 ml aliquots were passed through 25 mm discs at rate of 40 ml/min and collected into sterile vials; c) 57-wt% of PAC (see Table 16). | | | | |

**Table 18 - MS2 retention by NC and PAC/NC media**

| Media | Thickness, Mm | Basic weight, g/m$^2$ | MS2 input concentration, PFU[a]/ml | MS2 removal[b], % |
|---|---|---|---|---|
| 616[c] | 1.2 | 276 | 6·10$^6$ | 99 |
| 617[c] | 1.2 | 269 | 1.8·10$^6$ | 99 |
| NC | 0.8 | 220 | 6·10$^5$ | 99.5 |
| Notes: a) Plaque Forming Units (PFU); b) a 10 ml aliquots were passed through 25 mm discs at rate of 40 ml/min and collected into sterile vials; c) see Table 16. | | | | |

## EXAMPLE 22

The purpose of this series was to measure the dynamic adsorption efficiency of soluble contaminants from an aqueous stream. Iodine was used as a surrogate because the capacity of activated carbons is quoted by manufacturers of GAC and PAC carbons as iodine number. Iodine is also a suitable surrogate for chlorine, which is intentionally added as a disinfectant into water streams, but contributes to poor taste and odor of drinking water. Drinking water filters use activated carbons to remove chlorine.

In this example, Iodine solutions of 20 ppm were passed through single layer, 25 mm discs of several furnishes of PAC-NC at a flow rate of about 50 ml/min. Two ml aliquots were collected into a cuvette (1 cm pass length). The absorbance values of both stock solution and the effluent were measured at a wavelength of 290 nm with the use of a Genesys-10 UV/VIS spectrophotometer. The method has a detection limit of approximately 0.3 ppm.

The data in Table 19 show that the volume of effluent reaches 0.5 ppm (above 0.5 ppm, iodine taste is apparent to an average person) and 10 ppm (50% of the influent level of 20 ppm).

The efficiency of PAC/NC structure to retain iodine under such dynamic conditions is compared to media from three manufacturers (A, B, and C). The media was sectioned from cartridges (2.5" diameter X 10" long) obtained commercially.

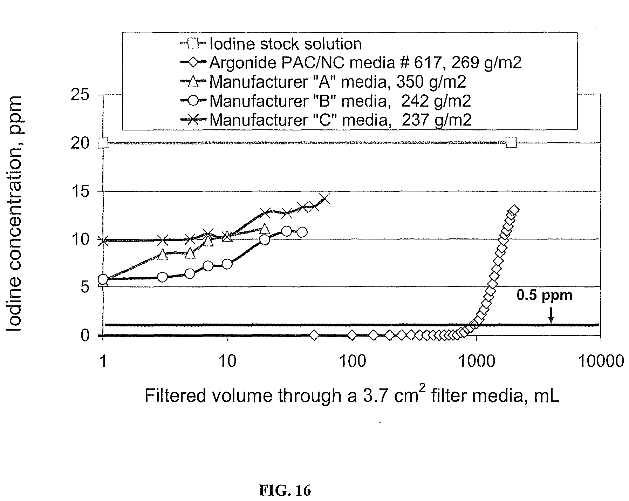

Breakthrough was almost immediate in the case of the commercially available filter media, while the PAC-NC structure had extensive capacity for iodine. Figure 16 shows a breakthrough curve for sample 617 compared to the media of the three manufacturers. A semi-log plot is used to enhance the details of the breakthrough curves, particularly for the commercial filter media.

The data also show that a single layer of the commercial media would immediately allow iodine into the effluent that would be detectable by taste and odor. In contrast, the new PAC-NC structure was able to pass approximately 800 ml of solution containing 20 ppm iodine before iodine reached 0.5 ppm. This extraordinary dynamic capacity, with such a rapid adsorption reaction compared to commercial media (greater than 800 to 1), was not anticipated. While not wishing to be bound by theory, it is likely that the fine particles of powdered activated carbon are retained within the structure and not washed out.

Table 19 shows the volume of solution purified of iodine to a concentration of 0.5 and 10 ppm. The amount of iodine adsorbed to 10 ppm is shown, along with a calculated value of iodine capacity, comparing the mass of iodine removed under dynamic conditions versus the static adsorption capacity from manufacturers' iodine number values. The PAC/NC samples all had similar breakthrough curves, with each retaining approximately 55%-72% of the static capacity for iodine before detecting iodine leakage, while the capacity utilized by the commercial media was at most only 3.4%. These data highlight the benefits of utilizing very fine particulates that are retained within a structure to physically adsorb or chemisorb contaminants from a fluid.

**Table 19. Adsorption of 20 ppm I₂ by a single layer of media**

| Media | Basis weight, g/m² | % of carbon in media | Volume (ml) of I₂ to 0.5 ppm | Volume (ml) of I₂ to 10 ppm | Amount of I₂ adsorbed to 50% influent, mg (I₂)/g carbon | % of static sorption capacity |
|---|---|---|---|---|---|---|
| PAC/NC, #617 | 269 | 57 | 850 | 1700 | 443 | 55[a] |
| PAC/NC, #618 | 287 | 46 | 750 | 1850 | 533 | 67[a] |
| PAC/NC, #619 | 356 | 44 | 600 | 1760 | 553 | 67[a] |
| PAC/NC, #620 | 297 | 55 | 850 | 2110 | 517 | 65[a] |
| PAC/NC, #621 | 322 | 44 | 850 | 2050 | 579 | 72[a] |
| Manufacturer "A" | 350 | 50[b] | <1[d] | 10[d] | 2[b] | 0.4[b,c] |
| Manufacturer "B" | 242 | 20-30[b] | <1[d] | 20[d] | 11-17[b] | 2.2-3.4[b,c] |
| Manufacturer "C" | 237 | 20-30[b] | <1[d] | 5[d] | 3-4[b] | 0.6-0.9[b,c] |
| Notes: a) iodine number for Calgon WPH PAC is >800 mg/g. In this example it is taken to be 800 mg/g; b) estimated value; c) iodine number of 500 mg/g assumed for estimated carbon mass of A, B, and C media; d) three series of measurements, reproducible within each series. To avoid any possibility of by-pass due to lack of wetting, each sample was wet for 2 hours and then flushed as usual with RO water. | | | | | | |

## EXAMPLE 24

Testing of samples as in Example 23 were repeated in this example, with the exception that the influent was 500 ppm compared to 20 ppm. Two different wavelengths were used to enhance the detection limit: 290 nm for the low concentration effluents, and 450 nm for the higher concentrations, where the detection limit is also approximately 3 ppm. A higher utilization capacity (76% through 147%) was attainable (Table 20) approaching and exceeding the lower value of the static limit as defined by the iodine number. The higher utilization with higher challenge concentrations can be explained by Langmuir or Freundlich adsorption isotherms that predict a higher retention of sorbate with higher concentrations [C. Tien, Absorption Calculations and Modeling, Butterworth-Heinemann, Boston, 2001]. The values of static capacity greater than 100% is explained since the iodine number defined by Calgon Carbon, the manufacturer, is greater than 800 mg/g. The value of 800 mg/g was assumed in the calculation.

**Table 20. Adsorption of iodine at 500 ppm input concentration by a single layer of PAC media**

| Media | Basis weight, g/m² | % of carbon in media | Volume (ml) of adsorbed iodine solution to 250 ppm limit (50%) | Amount of I₂ adsorbed to 50% influent, mg (I₂)/g carbon | % of static sorption capacity |
|---|---|---|---|---|---|
| PAC/NC, #617 | 269 | 57 | 180 | 1170 | 147[a] |
| PAC/NC, #618 | 287 | 46 | 94 | 712 | 89[a] |
| PAC/NC, #619 | 356 | 44 | 95 | 607 | 76[a] |
| PAC/NC, #620 | 297 | 55 | 103 | 630 | 79[a] |

(continued)

| Media | Basis weight, g/m² | % of carbon in media | Volume (ml) of adsorbed iodine solution to 250 ppm limit (50%) | Amount of $I_2$ adsorbed to 50% influent, mg ($I_2$)/g carbon | % of static sorption capacity |
|---|---|---|---|---|---|
| PAC/NC, #621 | 322 | 44 | 150 | 1060 | 133[a] |

The high adsorption capacity of PAC-NC for soluble contaminants is directly translatable to an air filter, where volatile organic molecules are able to be adsorbed by the PAC that is incorporated into air filter.

Additionally, the PAC-NC medium operating in either air or water is capable of removing chlorine and bromine as rapidly as it removes iodine. This filter medium could be used in chemical processing where chlorine is a reactant. Notably, retention of chlorine from escape to the atmosphere such as via a vent gas is very important as it is detectable by human smell at about 0.3 parts per million and above, and has an irritation threshold of about 0.5 parts per million. Furthermore, the claimed PAC-NC medium is useful in preventing leakage of chlorine gas during transport.

**EXAMPLE 25: Dirt Holding Capacity**

The dirt holding capacity of sample PAC-NC (sample 621) for A2 fine test dust (PTI, Inc) was measured and compared (Table 21) to NC media. The test involved challenging 25 mm diameter discs with 250 NTU suspension of A2 fine dust in RO water until the pressure drop reached 40 psi. Effluent turbidity was less than the detectable limit of 0.01 NTU throughout the test in each case, demonstrating that the shedding of powder into the effluent was minimal. The new carbon filled media was as effective at removing such dust as NC media. This was a surprising result because it was previously assumed that PAC consumes the ability of the NC media to adsorb particles.

**Table 21- Dirt holding capacity at 250 NTU input concentration[a]**

| Media | Capacity, mg/cm² |
|---|---|
| PAC/NC#621 | 118 |
| NC | 110 |
| Notes: a) corresponds to A2 fine dust load of ∼350 ppm | |

**CALCULATIONS**

From the data shown in Table 1, the air permeability $B$(m²) for the samples were determined as:

$$B = v\mu z / \Delta P, \qquad\qquad [2]$$

where:

v-flow velocity, m/s at a given $\Delta P$
$\mu$- air viscocity. For air - $\mu = 18.6 \cdot 10^{-6}$ Pa s
z - thickness of the media
$\Delta P$-pressure drop across the media, Pa

Equation 2 assumes that the flow through the filter is in the viscous range. Moreover, in the case of gas-flow measurements it requires two additional conditions [2]: (i) the pore diameters are larger than 1 micron (ii) the absolute pressure on the upstream face is no greater than 1.1 times of that on the downstream face, i.e., the upstream gage pressure should be no more than 40 inches of $H_2O$, when the downstream gage pressure is zero (i.e., 400 inches of $H_2O$ absolute). When those two conditions are met Equation 2 may be used to deduce permeability.

From Eq. [2] and Figure 1 the permeability of filter media was determined. From the permeability value and porosity the flow-averaged flow diameter, *d,* was determined as:

$$d^2 = 32B/\varepsilon^2 \qquad\qquad\qquad\qquad [3]$$

where $\varepsilon$- porosity.

Flow diameters $d$ are shown in Table 1. The average pore size of the nano alumina media ranged from 4.2 to 38 $\mu$m.

From Figure 1 as well as similar graphs for the other samples, the dependence of linear velocity of air through the media versus the applied pressure drop was determined and is shown in Table 1. From these equations the air $\Delta$P (in mm water, gauge) at a linear flow of 3.2 m/min are compared with that of the HEPA.

While the foregoing has been set forth in considerable detail, it is to be understood that the examples and detailed embodiments are presented for elucidation and not limitation. Design variations, especially in matters of shape, size, and arrangements, may be made but are within the principles of the invention. Those skilled in the art will realize that such changes or modifications of the invention or combinations of elements, variations, equivalents, or improvements therein are still within the scope of the invention as defined in the appended claims and that the present invention may be suitably practiced in the absence of any limitation not explicitly described in this document.

**Claims**

1.  A use of a filter for filtering fluids, said filter comprising:

    a. nano alumina fibres;
    b. a plurality of second fibres comprised of a combination of a plurality of coarse and a plurality of fine fibers and mixed with said nano alumina fibres, said second fibres arranged to create asymmetrical pores; and
    c. a plurality of particles disposed on said nano alumina fibers, wherein the plurality of particles have an average particle size of below 0.1 $\mu$m.

2.  The use according to claim 1, wherein the filter has one of the following features:

    • said asymmetrical pores have an average pore size that is greater than 5 $\mu$m;
    • said second fibres are selected from the group consisting of microglass fibres, cellulose fibres, fibrillated cellulose fibres, and lyocell fibres.

3.  A fibrous structure, said fibrous structure comprising:

    a. nano alumina fibres;
    b. a plurality of second fibres comprised of a combination of a plurality of coarse and a plurality of fine fibers and mixed with said nano alumina fibres, said second fibres arranged to create asymmetric pores; and
    c. a plurality of particles disposed on said nano alumina fibres, wherein the plurality of particles have an average particle size of below 0.1 $\mu$m.

4.  The fibrous structure as in claim 3 wherein said nano alumina fibres have an aspect ratio that is greater than 5 and a lesser dimension that is less than 50 nm.

5.  The fibrous structure as in claim 3 or 4 wherein said second fibres have one of the following features:

    • they are selected from the group consisting of microglass fibres, cellulose fibres, fibrillated cellulose and lyocell;
    • they each have a diameter that is more than ten times an average diameter of said nano alumina fibres.

6.  The fibrous structure as in any of claims 3 to 5 wherein said particles have one of the following features:

    • each of them has a diameter that is less than 50 $\mu$m;
    • they are selected from the group consisting of fine particles, ultrafine particles, and nanosize particles;
    • they are selected from the group consisting of a sorbent, an ion exchange resin, a catalyst, and a metal oxide, wherein said sorbent particles are preferably selected from the group consisting of powdered activated carbon, a precious metal, a macromolecular organic, a biological compound, and an antimicrobial agent, said metal oxide particles are preferably selected from the group consisting of fumed silica, fumed alumina, nano zinc oxide, and nano titanium oxide, and said catalyst is preferably an oxidation catalyst.

7. The fibrous structure as in claim 4 wherein said particles are powdered activated carbon.

8. The fibrous structure as in claim 7 wherein said powdered activated carbon is impregnated.

9. The fibrous structure as in claim 8 wherein said impregnant is a catalyst.

10. The fibrous structure as in claim 6 wherein said metal oxide is sub-micron in size.

11. The fibrous structure as in any of claims 3 to 10
wherein said fibrous structure is used to remove contaminants from a liquid, gas, or air medium, said contaminants preferably comprising at least one particulate matter.

12. The fibrous structure as in claim 11 wherein said at least one particulate matter comprises sub-micron particles.

13. The fibrous structure as in claim 3, which is a medical structure.

14. The fibrous structure as in claim 13 wherein said particles have one of the following features:

• they are selected from the group consisting of fine particles, ultrafine particles, and nanosize particles;
• they are selected from the group consisting of a sorbent, a drug, and an antimicrobial agent;
• they comprise powdered activated carbon.

15. The fibrous structure as in claim 13 or 14 wherein said medical structure is a wound dressing.

16. A method of manufacturing a fibrous structure, said method comprising the steps of:

a. forming nano alumina fibres;
b. mixing a plurality of second fibres comprised of a combination of a plurality of coarse and a plurality of fine fibers with said nano alumina fibres in the presence of said second fibres;
c. adding a plurality of particles to said mixture, wherein the plurality of particles have an average particle size of below 0.1 $\mu$m; and
d. forming a plurality of asymmetrical pores.

17. The method as in claim 16, said method further comprising the step of removing water from said mixture to form a non-woven structure.


**Patentansprüche**

1. Verwendung eines Filters zum Filtern von Fluiden, wobei der Filter umfasst:

a. Nano-Aluminiumoxidfasern;
b. mehrere zweite Fasern, die eine Kombination mehrerer grober und mehrerer feiner Fasern umfassen und die mit den Nano-Aluminiumoxidfasern gemischt sind, wobei die zweiten Fasern so angeordnet sind, dass sie asymmetrische Poren erzeugen; und
c. mehrere Teilchen, die auf den Nano-Aluminiumoxidfasern angeordnet sind, wobei die mehreren Teilchen eine mittlere Teilchengröße von weniger als 0,1 $\mu$m haben.

2. Verwendung gemäß Anspruch 1, wobei der Filter eines der folgenden Merkmale hat:

• die asymmetrischen Poren haben eine mittlere Porengröße, die größer als 5 $\mu$m ist;
• die zweiten Fasern sind ausgewählt aus der Gruppe bestehend aus Mikroglasfasern, Cellulosefasern, fibrillierten Cellulosefasern und Lyocellfasern.

3. Faserstruktur, wobei die Faserstruktur umfasst:

a. Nano-Aluminiumoxidfasern;

b. mehrere zweite Fasern, die eine Kombination mehrerer grober und mehrerer feiner Fasern umfassen und die mit den Nano-Aluminiumoxidfasern gemischt sind, wobei die zweiten Fasern so angeordnet sind, dass sie asymmetrische Poren erzeugen; und

c. mehrere Teilchen, die auf den Nano-Aluminiumoxidfasern angeordnet sind, wobei die mehreren Teilchen eine mittlere Teilchengröße von weniger als 0,1 $\mu$m haben.

4. Faserstruktur wie in Anspruch 3, wobei die Nano-Aluminiumoxidfasern ein Aspektverhältnis, das größer als 5 ist, und eine kürzere Dimension, die kleiner als 50 nm ist, haben.

5. Faserstruktur wie in Anspruch 3 oder 4, wobei die zweiten Fasern eines der folgenden Merkmale haben:

• sie sind ausgewählt aus der Gruppe bestehend aus Mikroglasfasern, Cellulosefasern, fibrillierter Cellulose und Lyocell;

• sie haben jeweils einen Durchmesser, der mehr als das Zehnfache des mittleren Durchmessers der Nano-Aluminiumoxidfasern beträgt.

6. Faserstruktur wie in mindestens einem der Ansprüche 3 bis 5, wobei die Teilchen eines der folgenden Merkmale haben:

• jedes davon hat einen Durchmesser, der kleiner als 50 $\mu$m ist;

• sie sind ausgewählt aus der Gruppe bestehend aus feinen Teilchen, ultrafeinen Teilchen und Nano-Teilchen; sie sind ausgewählt aus der Gruppe bestehend aus einem Sorptionsmittel, einem Ionenaustauscherharz, einem Katalysator und einem Metalloxid, wobei die Sorptionsmittelteilchen vorzugsweise aus der Gruppe bestehend aus pulverförmiger Aktivkohle, einem Edelmetall, einer makromolekularen organischen, einer biologischen Verbindung und einem antimikrobiellen Mittel, ausgewählt sind, die Metalloxidteilchen vorzugsweise aus der Gruppe bestehend aus pyrogenem Siliciumdioxid, pyrogenem Aluminiumoxid, Nano-Zinkoxid und Nanotitanoxid, ausgewählt sind, und der Katalysator vorzugsweise ein Oxidationskatalysator ist.

7. Faserstruktur wie in Anspruch 4, wobei die Teilchen pulverförmige Aktivkohle sind.

8. Faserstruktur wie in Anspruch 7, wobei die pulverförmige Aktivkohle imprägniert ist.

9. Faserstruktur wie in Anspruch 8, wobei das Imprägniermittel ein Katalysator ist.

10. Faserstruktur wie in Anspruch 6, wobei das Metalloxid eine Submikrometer-Größe aufweist.

11. Faserstruktur wie in mindestens einem der Ansprüche 3 bis 10, wobei die Faserstruktur verwendet wird, um Verunreinigungen aus einem Flüssigkeits-, Gas- oder Luftmedium zu entfernen, wobei die Verunreinigungen vorzugsweise mindestens ein teilchenförmiges Material umfassen.

12. Faserstruktur wie in Anspruch 11, wobei das mindestens eine teilchenförmige Material Submikrometer-Teilchen umfasst.

13. Faserstruktur wie in Anspruch 3, die eine medizinische Struktur ist.

14. Faserstruktur wie in Anspruch 13, wobei die Teilchen eines der folgenden Merkmale haben:

• sie sind ausgewählt aus der Gruppe bestehend aus feinen Teilchen, ultrafeinen Teilchen und Nano-Teilchen;

• sie sind ausgewählt aus der Gruppe bestehend aus einem Sorptionsmittel, einem Arzneimittel und einem antimikrobiellen Mittel;

• sie umfassen pulverförmige Aktivkohle.

15. Faserstruktur wie in Anspruch 13 oder 14, wobei die medizinische Struktur ein Wundverband ist.

16. Verfahren zur Herstellung einer Faserstruktur, wobei das Verfahren die Schritte:

a. Bilden von Nano-Aluminiumoxidfasern;

b. Mischen mehrerer zweiter Fasern, die eine Kombination mehrerer grober und mehrerer feiner Fasern umfassen, mit den Nano-Aluminiumoxidfasern in Anwesenheit der zweiten Fasern;

c. Hinzufügen mehrerer Teilchen zu der Mischung, wobei die mehreren Teilchen eine mittlere Teilchengröße von weniger als 0,1 $\mu$m haben; und

d. Bilden mehrerer asymmetrischer Poren umfasst.

17. Verfahren wie in Anspruch 16, wobei das Verfahren ferner den Schritt des Entfernens von Wasser aus der Mischung, um eine Vliesstruktur zu bilden, umfasst.

**Revendications**

1. Utilisation d'un filtre pour filtrer des fluides, ledit filtre comprenant :

   a. des fibres de nano-aluminium ;

   b. une pluralité de secondes fibres comprenant une combinaison d'une pluralité de fibres grossières et d'une pluralité de fibres fines et mélangées avec lesdites fibres de nano-aluminium, lesdites secondes fibres étant agencées pour créer des pores asymétriques ; et

   c. une pluralité de particules disposées sur lesdites fibres de nano-aluminium, dans laquelle la pluralité de particules a une taille de particule moyenne inférieure à 0,1 $\mu$m.

2. Utilisation selon la revendication 1, dans laquelle le filtre a l'une des caractéristiques suivantes :

   • lesdits pores asymétriques ont une taille de pore moyenne qui est supérieure à 5 $\mu$m ;

   • lesdites secondes fibres sont sélectionnées dans le groupe constitué de microfibres de verre, de fibres de cellulose, de fibres de cellulose fibrillée, et de fibres de lyocell.

3. Structure fibreuse, ladite structure fibreuse comprenant :

   a. des fibres de nano-aluminium ;

   b. une pluralité de secondes fibres comprenant une combinaison d'une pluralité de fibres grossières et d'une pluralité de fibres fines et mélangées avec lesdites fibres de nano-aluminium, lesdites secondes fibres étant agencées pour créer des pores asymétriques ; et

   c. une pluralité de particules disposées sur lesdites fibres de nano-aluminium, dans laquelle la pluralité de particules a une taille de particule moyenne inférieure à 0,1 $\mu$m.

4. Structure fibreuse selon la revendication 3 dans laquelle lesdites fibres de nano-aluminium ont un rapport d'aspect qui est supérieur à 5 et une plus petite dimension qui est inférieure à 50 nm.

5. Structure fibreuse selon la revendication 3 ou 4 dans laquelle lesdites secondes fibres ont l'une des caractéristiques suivantes :

   • elles sont sélectionnées dans le groupe constitué de microfibres de verre, de fibres de cellulose, de cellulose fibrillée et de lyocell ;

   • elles ont chacune un diamètre qui est plus de dix fois un diamètre moyen desdites fibres de nano-aluminium.

6. Structure fibreuse selon l'une quelconque des revendications 3 à 5 dans laquelle lesdites particules ont l'une des caractéristiques suivantes :

   • chacune d'elles a un diamètre qui est inférieur à 50 $\mu$m

   • elles sont sélectionnées dans le groupe constitué de particules fines, de particules ultrafines, et de nanoparticules ;

   • elles sont sélectionnées dans le groupe constitué d'un sorbant, d'une résine échangeuse d'ions, d'un catalyseur, et d'un oxyde métallique, dans lequel lesdites particules de sorbant sont de préférence sélectionnées dans le groupe constitué de charbon actif poudreux, d'un métal précieux, d'un composé organique macromoléculaire, d'un composé biologique, et d'un agent antimicrobien, lesdites particules d'oxyde métallique sont de préférence sélectionnées dans le groupe constitué de silice pyrogénée, d'aluminium pyrogéné, de nano-oxyde de zinc, et de nano-oxyde de titane, et ledit catalyseur est de préférence un catalyseur d'oxydation.

7. Structure fibreuse selon la revendication 4 dans laquelle lesdites particules sont du charbon actif poudreux.

8. Structure fibreuse selon la revendication 7 dans laquelle ledit charbon actif poudreux est imprégné.

9. Structure fibreuse selon la revendication 8 dans laquelle ledit imprégnant est un catalyseur.

10. Structure fibreuse selon la revendication 6 dans laquelle ledit oxyde métallique est de taille inférieure au micron.

11. Structure fibreuse selon l'une quelconque des revendications 3 à 10 dans laquelle ladite structure fibreuse est utilisée pour retirer des contaminants d'un milieu liquide, gazeux ou aérien, lesdits contaminants comprenant de préférence au moins une matière particulaire.

12. Structure fibreuse selon la revendication 11 dans laquelle ladite au moins une matière particulaire comprend des particules inférieures au micron.

13. Structure fibreuse selon la revendication 3, qui est une structure médicale.

14. Structure fibreuse selon la revendication 13, dans laquelle lesdites particules ont l'une des caractéristiques suivantes :

- elles sont sélectionnées dans le groupe constitué de particules fines, de particules ultrafines, et de nanoparticules ;
- elles sont sélectionnées dans le groupe constitué d'un sorbant, d'un médicament, et d'un agent antimicrobien ;
- elles comprennent du charbon actif poudreux.

15. Structure fibreuse selon la revendication 13 ou 14 dans laquelle ladite structure médicale est un pansement pour blessure.

16. Procédé de fabrication d'une structure fibreuse, ledit procédé comprenant les étapes de :

a. formation de fibres de nano-aluminium ;
b. mélange d'une pluralité de secondes fibres comprenant une combinaison d'une pluralité de fibres grossières et d'une pluralité de fibres fines avec lesdites fibres de nano-aluminium en présence desdites secondes fibres ; et
c. ajout d'une pluralité de particules audit mélange, dans lequel la pluralité de particules a une taille de particule moyenne inférieure à 0,1 $\mu$m ; et
d. formation d'une pluralité de pores asymétriques.

17. Procédé selon la revendication 16, ledit procédé comprenant en outre l'étape d'enlèvement de l'eau dudit mélange pour former une structure non tissée.

Figure 1

EP 2 001 572 B1

Figure 2

Figure 3

Figure 4

35

Figure 5

Figure 6

Figure 7

EP 2 001 572 B1

Figure 8

Figure 9

Figure 10

EP 2 001 572 B1

Figure 11

Figure 12

Figure 13

Figure 14

Fig. 15

**FIG. 16**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20030127393 A

- US 6872431 B

**Non-patent literature cited in the description**

- **C. TIEN.** Absorption Calculations and Modeling. Butterworth-Heinemann, 2001